(19) Europäisches Patentamt
European Patent Office
Office européen des brevets

(11) **EP 3 947 283 B1**

(12) **EUROPÄISCHE PATENTSCHRIFT**

(45) Veröffentlichungstag und Bekanntmachung des Hinweises auf die Patenterteilung:
**03.07.2024 Patentblatt 2024/27**

(21) Anmeldenummer: **20714970.9**

(22) Anmeldetag: **23.03.2020**

(51) Internationale Patentklassifikation (IPC):
$C01B\ 33/113^{(2006.01)}$  $C08K\ 7/26^{(2006.01)}$
$C09J\ 7/00^{(2018.01)}$  $C09J\ 11/00^{(2006.01)}$
$C09J\ 133/00^{(2006.01)}$  $C09J\ 151/00^{(2006.01)}$
$C09J\ 153/00^{(2006.01)}$  $C09J\ 7/38^{(2018.01)}$
$C09J\ 153/02^{(2006.01)}$

(52) Gemeinsame Patentklassifikation (CPC):
(C-Sets verfügbar)
**C09J 7/387; C01B 33/113; C09J 153/02;**
C01P 2004/32; C01P 2004/52; C01P 2004/54;
C01P 2004/60; C01P 2006/12; C08K 2201/005;
C09J 2301/308; C09J 2301/408    (Forts.)

(86) Internationale Anmeldenummer:
**PCT/EP2020/057941**

(87) Internationale Veröffentlichungsnummer:
**WO 2020/193461 (01.10.2020 Gazette 2020/40)**

(54) **WIEDERABLÖSBARER HAFTKLEBESTREIFEN**

DETACHABLE ADHESIVE STRIP

BANDE ADHÉSIVE DE CONTACT DÉTACHABLE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **28.03.2019 DE 102019204344**

(43) Veröffentlichungstag der Anmeldung:
**09.02.2022 Patentblatt 2022/06**

(73) Patentinhaber: **tesa SE**
**22848 Norderstedt (DE)**

(72) Erfinder:
• **MAYER, Michael**
**20259 Hamburg (DE)**
• **PÖHLS, Jan Ole**
**22763 Hamburg (DE)**
• **SCHUBERT, Thomas**
**22850 Norderstedt (DE)**

(74) Vertreter: **tesa SE**
**Hugo-Kirchberg-Straße 1**
**22848 Norderstedt (DE)**

(56) Entgegenhaltungen:
**WO-A1-2010/082658    WO-A1-2014/174958**
**WO-A1-2019/072707**

(52) Gemeinsame Patentklassifikation (CPC): (Forts.)

C-Sets
**C09J 153/02, C08L 53/02**

**Beschreibung**

Die Erfindung betrifft einen füllstoffhaltigen Haftklebestreifen, welcher zur Schaffung einer durch dehnende Verstreckung wieder lösbaren Verbindung eingesetzt werden kann.

Grundsätzlich ist der Einsatz von Füllstoffen in Polymerzusammensetzungen und Klebstoffen bekannt, beispielsweise mit dem Ziel, den Preis, die Optik oder bestimmte Eigenschaften zu modifizieren. Beispielsweise ist Kreide ein populärer Füllstoff für Rezepturen auf Basis von Naturkautschuk; Glashohlkugeln oder polymere Hohlkugeln werden häufig zur Herstellung von Acrylatschäumen verwendet. Es ist eine große Bandbreite an Dimensionen und Formen der Füllstoffe bekannt, die von nano- bis zu makroskaligen und von hohlen über poröse, runde, plättchenförmige und schichtförmige bis zu verästelten Füllstoffen reicht.

Bekannt ist beispielsweise die Verwendung von makroskaligen Hohlkugeln, wie sie in WO 2007 058812 A1 oder EP 1 995 282 A1 beschrieben ist.

Nanoskalige Füllstoffe sind häufig gefällte oder pyrogene Kieselsäuren oder auch Ruße. Die Dispergierung dieser Substanzen gestaltet sich schwierig, ihre verstärkende Wirkung hängt häufig vom Dispergiererfolg im Herstellungsprozess ab. Pyrogene Kieselsäure wird insbesondere zum Modifizieren der Beschichtungsviskosität eingesetzt. Ihre Wirkung wird meistens in Zusammenhang mit ihrer dreidimensionalen Struktur gebracht, wodurch sie verdickend und thixotropisch wirkt. Pyrogene Kieselsäuren sind vor allem dadurch gekennzeichnet, dass die Primärpartikel meist 5 - 50 nm groß und nicht vereinzelbar sind, sondern in Aggregaten untrennbar gebunden sind. Diese bilden dann Agglomerate, welche Durchmesser bis in den Mikrometer-Maßstab haben können.

Bekannt ist auch die Verwendung von Silica in Polyacrylaten, welche mit Mikroballons geschäumt sind, z.B. aus WO 2010 147888 A2.

US 7,531,595 lehrt die Verwendung nadelförmiger Silica-Nanofüllstoffe mit einem durchschnittlichen Durchmesser von 9 bis 25 nm und einer Länge von 40 bis 300 nm.

Aus EP 2 268 757 A1 sind nanoskalige core-shell-Partikel bekannt, welche verwendet werden, um die Eigenschaften von Polymeren zu beeinflussen. Nachteilig hierbei sind aufwändige Herstellprozesse. Es wäre wünschenswert keine Core-Shell-Architektur einsetzen zu müssen, weil derartige Partikel nur mit hohem Aufwand und in komplexen Verfahren hergestellt werden können.

Die Verwendung bestimmter anorganischer Füllstoffe in Haftklebmassen ist in DE 10 2015 208 792 A1 offenbart. WO 2011 133 518 A1 beschreibt den Einsatz oberflächenmodifizierter Siliziumdioxide mit einer Partikelgröße kleiner 100 nm in Haftklebmassen.

Für viele Anwendungen ist eine hohe Festigkeit von Haftklebmassen gewünscht. Der Begriff "Festigkeit" bezieht sich dabei auf die Bruchfestigkeit der Klebmasse selbst, nicht auf die an der Grenzfläche zum zu verklebenden Substrat auftretende Adhäsion. Häufig sollen Haftklebmassen neben einer hohen Festigkeit auch eine hohe Dehnbarkeit aufweisen, denn hohe Dehnbarkeit bei hoher Festigkeit ergibt eine hohe Zähigkeit. Die Zähigkeit lässt sich als das Energieaufnahmevermögen der Masse verstehen.

Ein Weg um die Festigkeit von Klebmassen zu erhöhen ist der Einsatz von Füllstoffen. Diese verschlechtern aber regelmäßig die Dehnbarkeit und häufig auch die Adhäsion. Eine befriedigende Festigkeit und Dehnbarkeit von Klebmassen ist daher in der Regel nicht zu erreichen. Eine gefüllte Haftklebmasse ist in der noch nicht veröffentlichten DE 10 2017 218 264 offenbart. Die Haftklebmasse enthält mindestens ein Polymer und mindestens einen in seine Primärpartikel vereinzelbaren Füllstoff, wobei dieser Füllstoff sphärische Primärpartikel mit einem mittleren Durchmesser $d(0,5)$ von 50 nm bis 10 $\mu$m enthält und diese Partikel nicht aus konzentrischen Schichten aufgebaut sind.

Elastisch oder plastisch hochdehnbare Haftklebebänder, welche sich durch dehnendes Verstrecken in der Verklebungsebene, d.h. bei einem Abziehwinkel von 0°, rückstands- und zerstörungsfrei wieder ablösen lassen, sind beispielsweise aus der US 4,024,312 A, DE 33 31 016 C2, WO 92/11332 A1, WO 92/11333 A1, DE 42 22 849 C1, WO 95/06691 A1, DE 19531 696 A1, DE 196 26 870 A1, DE 196 49 727 A1, DE 196 49 728 A1, DE 196 49 729 A1, DE 197 08 364 A1, DE 197 20 145 A1, DE 198 20 858 A1, WO 99/37729 A1 und DE 100 03 318 A1 bekannt und werden nachfolgend auch als strippfähige Haftklebebänder bezeichnet.

Eingesetzt werden solche strippfähigen Haftklebebänder häufig in Form von ein- oder beidseitig haftklebrigen Klebfolienstreifen, die bevorzugt einen nicht haftklebrigen Anfassbereich aufweisen, von welchem aus der Ablöseprozess eingeleitet wird. Besondere Anwendungen entsprechender Haftklebebänder finden sich unter anderem in DE 42 33 872 C1, DE 195 11 288 C1, US 5,507,464 B1, US 5,672,402 B1 und WO 94/21157 A1. Spezielle Ausführungsformen sind auch in der DE 44 28 587 C1, DE 44 31 914 C1, WO 97/07172 A1, DE 196 27 400 A1, WO 98/03601 A1 und DE 196 49 636 A1, DE 197 20 526 A1, DE 197 23 177 A1, DE 197 23 198 A1, DE 197 26375A1, DE 197 56 084 C1, DE 197 56 816 A1, DE 198 42 864 A1, DE 198 42 865 A1, WO 99/31193 A1, WO 99/37729 A1, WO 99/63018 A1, WO 00/12644 A1 und DE 199 38 693 A1 beschrieben.

Einsatz von Füllstoffen in Haftklebemassen für stripfähige Produkte ist ebenfalls an sich bekannt, zum Beispiel aus DE 102 12 049 A1 oder DE 100 63 018 B4.

Bevorzugte Einsatzgebiete vorgenannter strippfähiger Klebfolienstreifen beinhalten insbesondere die rückstands- und zerstörungsfrei wieder ablösbare Fixierung leichter bis mittelschwerer Gegenstände im Wohn-, Arbeits- und Bürobereich. Für den Einsatz im Wohn- und Bürobereich werden im Allgemeinen recht dicke Produkte von über 400 μm eingesetzt. In der Consumer-Elektronik-Industrie wie zum Beispiel bei der Herstellung von Mobiltelefonen, Digitalkameras oder Laptops wird der Wunsch nach einer Möglichkeit, die einzelnen Bauteile nach der Nutzung bei der Entsorgung zu trennen, immer größer. Dann können einige Bauteile wiederverwendet oder aufbereitet werden. Oder es ist zumindest eine getrennte Entsorgung ermöglicht. Daher sind wiederlösbare Klebeverbindungen in dieser Industrie von großem Interesse. Insbesondere Klebebänder, die eine hohe Halteleistung besitzen und auf Wunsch leicht entfernt werden können, bilden hier eine sinnvolle Alternative zu Klebestreifen, die zum Ablösen erst vorbehandelt werden müssen, indem sie zum Beispiel erhitzt werden. Im Bereich der Consumer-Elektronik sind Klebestreifen bevorzugt, die möglichst dünn sind, da die Endgeräte möglichst dünn sein und daher auch alle einzelnen Komponenten wenig Platz beanspruchen sollen.

Beim Einsatz von sehr dünnen strippfähigen Klebestreifen, die ohne Träger auskommen, kommt es vermehrt zu Reißern (siehe DE 33 31 016 C2). Wenn die Klebestreifen reißen, ist ein Ablösen in der Regel allerdings nicht mehr möglich, weil der Rest des Klebestreifens in die Klebefuge zurückschnellt und somit kein Anfasser zur Verfügung steht.

Die WO 92/11333 A1 beschreibt ein strippfähiges Klebeband, welches als Träger eine hochverstreckbare Folie nutzt, die nach Verstreckung ein Rückstellvermögen von < 50 % aufweist.

Die WO 92/11332 A1 beschreibt einen durch Ziehen in der Verklebungsebene wiederablösbaren Klebfolienstreifen, für welchen als Träger eine hochverstreckbare, im Wesentlichen nicht rückstellende Folie genutzt werden kann. Als Klebemassen kommen ausschließlich UV-vernetzte Acrylatcopolymere zum Einsatz, mit denen nicht die hohen Verklebungsfestigkeiten erreicht werden können und die weniger stark an Klebkraft während der Dehnung verlieren als dieses zum Beispiel bei Klebemassen auf Vinylaromatenblockcopolymerbasis der Fall ist.

Weitere Veröffentlichungen wie die WO 2010/141248 A1 beschreiben Systeme mit Polyisobutylenhaftklebemassen, die ebenfalls eine geringe Klebkraft aufweisen.

Ein strippfähiger Klebfolienstreifen mit einem geschäumten, nicht haftklebrigen Folienträger wird in WO 95/06691 A1, DE 196 49 727 A1, DE 196 49 728 A1, DE 196 49 729 A1 und DE 198 20 858 A1 beschrieben. Durch den Schaumstoffzwischenträger ist eine geringe Dicke des Klebfolienstreifens von unter 200 μm nicht möglich.

Geschäumte Haftklebemassensysteme sind seit längerem bekannt und im Stand der Technik beschrieben. Grundsätzlich lassen sich Polymerschäume auf zwei Wegen herstellen. Zum einen durch die Einwirkung eines Treibgases, sei es als solches zugesetzt oder aus einer chemischen Reaktion resultierend, zum anderen durch die Einarbeitung von Hohlkügelchen in die Werkstoffmatrix. Schäume, die auf letzterem Wege hergestellt wurden, werden als syntaktische Schäume bezeichnet.

Mit Mikrohohlkugeln geschäumte Massen zeichnen sich durch eine definierte Zellstruktur mit einer gleichmäßigen Größenverteilung der Schaumzellen aus. Mit Mikrohohlkugeln werden geschlossenzellige Schäume ohne Kavitäten erhalten, die sich im Vergleich zu offenzelligen Varianten unter anderem durch eine bessere Abdichtungswirkung gegen Staub und flüssige Medien auszeichnen. Darüber hinaus sind chemisch oder physikalisch geschäumte Materialien anfälliger für ein irreversibles Zusammenfallen unter Druck und Temperatur und zeigen häufig eine niedrigere Kohäsionsfestigkeit. Besonders vorteilhafte Eigenschaften lassen sich erzielen, wenn als Mikrokugeln zur Schäumung expandierbare Mikrokugeln (auch als "Mikroballons" bezeichnet) eingesetzt werden. Durch ihre flexible, thermoplastische Polymerschale besitzen derartige Schäume eine höhere Anpassungsfähigkeit als solche, die mit nicht expandierbaren, nicht polymeren Mikrohohlkugeln (beispielsweise Glashohlkugeln) gefüllt sind. Sie eignen sich besser zum Ausgleich von Fertigungstoleranzen, wie sie zum Beispiel bei Spritzgussteilen die Regel sind, und können aufgrund ihres Schaumcharakters auch thermische Spannungen besser kompensieren. Des Weiteren können durch die Auswahl des thermoplastischen Harzes der Polymerschale die mechanischen Eigenschaften des Schaums weiter beeinflusst werden. So ist es beispielsweise möglich, selbst dann, wenn der Schaum eine geringere Dichte als die Matrix aufweist, Schäume mit höherer Kohäsionsfestigkeit als mit der Polymermatrix allein herzustellen. So können typische Schaumeigenschaften wie die Anpassungsfähigkeit an raue Untergründe mit einer hohen Kohäsionsfestigkeit für haftklebende Schäume kombiniert werden.

In der EP 0 257 984 A1 werden Klebebänder offenbart, die zumindest einseitig eine geschäumte Klebebeschichtung aufweisen. In dieser Klebebeschichtung sind Polymerkügelchen enthalten, die ihrerseits eine Flüssigkeit aus Kohlenwasserstoffen enthalten und bei erhöhten Temperaturen expandieren. Die Gerüstpolymere der Haftklebemassen können aus Kautschuken oder Polyacrylaten bestehen. Die Mikroballons werden hier entweder vor oder nach der Polymerisation zugesetzt. Die Mikroballons enthaltenen Haftklebemassen werden aus Lösemittel verarbeitet und zu Klebebändern ausgeformt. Der Schritt der Schäumung erfolgt dabei konsequent nach der Beschichtung. So werden mikroraue Oberflächen erhalten. Daraus resultieren Eigenschaften wie insbesondere Repositionierbarkeit. Der Effekt der besseren Repositionierbarkeit durch mikroraue Oberflächen von mit Mikroballon geschäumten Haftklebemassen wird auch in weiteren Schriften wie DE 35 37 433 A1 oder WO 95/31225 A1 beschrieben. Die mikroraue Oberfläche wird verwendet, um eine blasenfreie Verklebung zu erzeugen. Diese Verwendung offenbaren auch die EP 0 693 097 A1 und die WO 98/18878 A1. Mit Mikroballons geschäumte Haftklebemassen sind auch aus den Schriften US 4,885,170 A und EP 1 102 809 B bekannt, hier werden sie aber als Füllstoff für Klebebänder zur permanenten Verklebung eingesetzt, welche nicht wieder ablösbar sind.

Zu den Geräten in der Consumer-Elektronik-Industrie zählen elektronische, optische und feinmechanische Geräte, im Sinne dieser Anmeldung insbesondere solche Geräte, wie sie in Klasse 9 der Internationalen Klassifikation von Waren und Dienstleistungen für die Eintragung von Marken (Klassifikation von Nizza), 10. Ausgabe (NCL(10-2013)), einzuordnen sind, sofern es sich dabei um elektronische, optische oder feinmechanische Geräte handelt, weiterhin Uhren und Zeitmessgeräte gemäß Klasse 14 (NCL(10-2013)), wie insbesondere

- Wissenschaftliche, Schifffahrts-, Vermessungs-, fotografische, Film-, optische, Wäge-, Mess-, Signal-, Kontroll-, Rettungs- und Unterrichtsapparate und - instrumente;
- Apparate und Instrumente zum Leiten, Schalten, Umwandeln, Speichern, Regeln und Kontrollieren von Elektrizität;
- Bildaufzeichnungs-, -verarbeitungs-, -übertragungs- und -wiedergabegeräte, wie beispielsweise Fernseher und dergleichen
- Akustische Aufzeichnungs-, Verarbeitungs-, -übertragungs- und - wiedergabegeräte, wie beispielsweise Rundfunkgeräte und dergleichen
- Computer, Rechengeräte und Datenverarbeitungsgeräte, mathematische Geräte und Instrumente, Computerzubehör, Bürogeräte - wie beispielsweise Drucker, Faxgeräte, Kopiergeräte, Schreibmaschinen -, Datenspeichergeräte
- Fernkommunikations- und Multifunktionsgeräte mit Fernkommunikationsfunktion, wie beispielsweise Telefone, Anrufbeantworter
- Chemische und physikalische Messgeräte, Steuergeräte und Instrumente, wie beispielweise Akkumulatorladegeräte, Multimeter, Lampen, Tachometer
- Nautische Geräte und Instrumente
- Optische Geräte und Instrumente
- Medizinische Geräte und Instrumente und solche für Sportler
- Uhren und Chronometer
- Solarzellenmodule, wie etwa elektrochemische Farbstoff-Solarzellen, organische Solarzellen, Dünnschichtzellen,
- Feuerlöschgeräte.

Die technische Entwicklung richtet sich vermehrt auf solche Geräte, die immer kleiner und leichter gestaltet werden, damit sie von ihrem Besitzer jederzeit mitgeführt werden können und üblicherweise regelmäßig mitgeführt werden. Dies geschieht üblicherweise durch Realisierung geringer Gewichte und/oder geeigneter Größe derartiger Geräte. Solche Geräte werden im Rahmen dieser Schrift auch als Mobilgeräte oder portable Geräte bezeichnet. Bei diesem Entwicklungstrend werden feinmechanische und optische Geräte zunehmend (auch) mit elektronischen Komponenten versehen, was die Möglichkeiten der Minimierung erhöht. Aufgrund des Mitführens der Mobilgeräte sind diese vermehrten - insbesondere mechanischen - Belastungen ausgesetzt, etwa durch Anstoßen an Kanten, durch Fallenlassen, durch Kontakt mit anderen harten Objekten in der Tasche, aber auch schon durch die permanente Bewegung durch das Mitführen an sich. Mobilgeräte sind aber auch stärkeren Belastungen aufgrund von Feuchtigkeitseinwirkungen, Temperatureinflüssen und dergleichen ausgesetzt als solche "immobilen" Geräte, die üblicherweise in Innenräumen installiert sind und nicht oder kaum bewegt werden.

Die Erfindung bezieht sich dementsprechend besonders bevorzugt auf Mobilgeräte, da der erfindungsgemäß eingesetzte Haftklebestreifen hier aufgrund seiner unerwartet guten Eigenschaften (sehr hohe Schockresistenz, geringe Anfälligkeit für Reißen beim dehnenden Verstrecken, d.h. geringe Reißeranfälligkeit) einen besonderen Nutzen hat. Nachfolgend sind einige portable Geräte aufgeführt, ohne sich durch die konkret genannten Vertreter in dieser Liste bezüglich des Gegenstands der Erfindung unnötig beschränken zu wollen.

- Fotoapparate, Digitalkameras, Fotografie-Zubehörgeräte (wie Belichtungsmesser, Blitzlichtgeräte, Blenden, Fotogehäuse, Objektive etc.), Filmkameras, Videokameras
- Kleincomputer (Mobilcomputer, Taschencomputer, Taschenrechner), Laptops, Notebooks, Netbooks, Ultrabooks, Tablet-Computer, Handhelds, elektronische Terminkalender und Organisatoren (sogenannte "Electronic Organizer" oder "Personal Digital Assistants", PDA, Palmtops), Modems,
- Computer-Zubehörgeräte und Bedieneinheiten für elektronische Geräte, wie Mäuse, Zeichenpads, Grafiktabletts, Mikrophone, Lautsprecher, Spielkonsolen, Gamepads, Fernsteuerungen, Fernbedienungen, Tastfelder ("Touchpads")
- Monitore, Displays, Bildschirme, berührungsempfindliche Bildschirme (Sensorbildschirme, "Touchscreen-Geräte"), Beamer
- Lesegeräte für elektronische Bücher ("E-Books"),
- Kleinfernsehgeräte, Taschenfernseher, Filmabspielgeräte, Videoabspielgeräte
- Radios (auch Klein- und Taschenrundfunkgeräte), Walkmen, Discmen, Musikabspielgeräte für z.B. CD, DVD, Blueray, Kassetten, USB, MP3, Kopfhörer

- Schnurlose Telefone, Mobiltelefone, Smartphones, Funksprechgeräte, Freisprechgeräte, Personenrufgeräte (Pager, Pieper)
- Mobile Defibrilatoren, Blutzuckermessgeräte, Blutdruckmessgeräte, Schrittzähler, Pulsmesser
- Taschenlampen, Laserpointer
- Mobile Detektoren, optische Vergrößerungsgeräte, Fernsichtgeräte, Nachtsichtgeräte
- GPS-Geräte, Navigationsgeräte, tragbare Schnittstellengeräte der Satellitenkommunikation
- Datenspeichergeräte (USB-Sticks, externe Festplatten, Speicherkarten)
- Armbanduhren, Digitaluhren, Taschenuhren, Kettenuhren, Stoppuhren.

Für diese Geräte sind insbesondere Klebebänder gefordert, die auf Wunsch leicht entfernt werden können. Des Weiteren ist es wichtig, dass die Klebebänder in ihrer Halteleistung nicht versagen, insbesondere wenn das elektronische Gerät, zum Beispiel ein Handy, fallengelassen wird und auf den Untergrund aufprallt. Der Klebestreifen muss also eine hohe Schockresistenz aufweisen. Die DE 10 2015 206 076 A1 beschreibt einen solchen Haftklebestreifen mit reduzierter Ablösekraft und hoher Schockresistenz, der sich durch dehnendes Verstrecken im Wesentlichen in der Verklebungsebene rückstands- und zerstörungsfrei wieder ablösen lässt, aus einer oder mehreren Klebemassenschichten, die allesamt aus einer Haftklebemasse bestehen, die mit Mikroballons geschäumt ist und insbesondere auf Basis von Vinylaromatenblockcopolymeren und Klebharzen aufgebaut ist, und gegebenenfalls aus einer oder mehreren Zwischenträgerschichten, wobei der Haftklebestreifen ausschließlich aus den genannten Klebemassenschichten und gegebenenfalls vorhandenen Zwischenträgerschichten besteht und die eine äußere obere und eine äußere untere Fläche des Haftklebestreifens von der oder den genannten Klebemassenschichten gebildet werden.

Die DE 10 2012 223 670 A1 betrifft einen Haftklebfolienstreifen aus mindestens zwei, insbesondere drei Schichten, der sich durch dehnendes Verstrecken im Wesentlichen in der Verklebungsebene rückstands- und zerstörungsfrei wieder ablösen lässt, mit einem Träger, auf dem zumindest einseitig eine erste, außenliegende Klebemassenschicht vorhanden ist, wobei die Klebemassenschicht aus einer Klebmasse besteht, die auf Basis von Vinylaromatenblockcopolymeren und Klebharzen aufgebaut ist, wobei zu mindestens 75 % (bezogen auf den Gesamtharzanteil) ein Harz gewählt wird mit einem DACP (diacetone alcohol cloud point) von größer -20 °C, bevorzugt größer 0 °C, und der Träger mindestens eine Schicht aufweist, die aus einem Polyurethan besteht mit einer Reißdehnung von mindestens 100 % und einem Rückstellvermögen von über 50 %. Der Träger ist somit hoch dehnbar und zum großen Teil elastisch. Ferner können weite Teile des Klebharzes nicht aus der Klebschicht in den Träger hinein wandern, was sich positiv auf die Halteleistung auswirkt.

Die US 2017/0218233 A1 betrifft ein Haftklebeband umfassend eine Substratschicht und auf beiden Seiten der Substratschicht laminierte Klebstoffschichten, wobei die Dicke der Substratschicht 25 $\mu$m bis 500 $\mu$m beträgt und die Substratschicht einen thermoplastischen synthetischen Kautschuk und eine Verstärkung umfasst, und wobei die Dicke jeder Klebeschicht jeweils 10 $\mu$m bis 240 $\mu$m beträgt und die Substratschicht einen thermoplastischen synthetischen Kautschuk und einen Füllstoff umfasst, wobei der Füllstoff ein Teilchen mit einem Durchmesser von 0,01 $\mu$m bis 120 $\mu$m ist. Die Klebkraft des Haftklebebandes beträgt 6.000 bis 25.000 gf / 20 mm, d.h. mindestens etwa 30 N/cm.

Die WO 2016/047436 A1 offenbart eine dehnbare Klebefolie, die für ein tragbares elektronisches Gerät verwendet wird, wobei die Klebefolie eine Klebeschicht umfasst, die Füllstoffteilchen enthält.

WO 2014/174958 beschreibt ein einseitiges Klebeband, das dadurch durch Bestrahlung wieder entfernt werden kann. Zu diesem Zweck umfasst das Klebeband einen shrinkable film layer 3 und einen rigid film layer 4 (s. Figur 3 der D1). Der shrinkable film layer 3 ist derart ausgestaltet, dass er durch Bestrahlung ausgehärtet wird und sich zusammenzieht. Dadurch rollt sich das Klebeband zusammen und kann vom Substrat entfernt werden.

WO 2010/082658 betrifft eine Harzzusammensetzung, die zur Bildung einer Isolierschicht, beispielsweise in einer Leiterplatte, verwendet werden kann. Die Harzzusammensetzung umfasst ein spezielles Cyanatesterharz, eine härtbare Polyvinylbenzylverbindung und einen Metallocen-Katalysator als Initiator.

WO 2019/072707 beschreibt eine Haftklebemasse aus mindestens einem Polymer und einem Füllstoff, wobei der Füllstoff sphärische Partikel mit einem mittleren Durchmesser von 50 nm bis 10 $\mu$m enthält.

Die stripfähigen Haftklebebänder aus dem Stand der Technik weisen jedoch das Problem auf, dass sie insbesondere beim Abziehen in einem Winkel von mindestens 45° gegenüber der Verklebungsebene, wie zum Beispiel 90° gegenüber der Verklebungsebene, häufig reißen. Ein Ablösen ist dann in der Regel nicht mehr möglich, weil der Rest des Klebestreifens in die Klebefuge zurückschnellt und somit kein Anfasser mehr zur Verfügung steht. Dies ist beispielsweise bei den üblicherweise eingesetzten Klebmassen auf Vinylaromatenblockcopolymerbasis selbst dann der Fall, wenn diese im Verbund mit Polyurethanträgern eingesetzt werden, auf die sie beschichtet worden sind. Insbesondere in Mobilgeräten wie z.B. Mobiltelefonen besteht jedoch beim Abziehen der stripfähigen Haftklebebänder immer weniger Platz, so dass Bedarf besteht an stripfähigen Haftklebebändern, die auch in einem Winkel von mindestens 45°, wie zum Beispiel 90°, gegenüber der Verklebungsebene abgezogen werden können, ohne zu reißen. Als Beispiel wird die Verwendung solcher stripfähigen Haftklebebänder beim Battery Mounting genannt. Ferner besteht ein Bedarf an stripfähigen Haftklebebändern, deren Schockresistenz weiter verbessert ist.

Es besteht somit ein anhaltender Bedarf an strippfähigen Haftklebestreifen, die eine hohe Reißerbeständigkeit haben, typischerweise auch bei einem Abzugswinkel von mindestens etwa 45° gegenüber der Verklebungsebene. Die Haftklebestreifen sollen zudem vorzugsweise glatt sein, eine hohe Klebkraft aufweisen, einen hohen Tack (d.h. eine hohe Anfassklebrigkeit) aufweisen und/oder schockresistent sein.

Die beschriebenen Aufgaben werden durch einen Haftklebestreifen wie in Anspruch 1 definiert gelöst. Anspruch 1 betrifft einen Haftklebestreifen, der sich durch dehnendes Verstrecken im Wesentlichen in der Verklebungsebene, d.h. bei einem Abzugswinkel von etwa 0°, rückstands- und zerstörungsfrei wieder ablösen lässt, aus ein oder mehreren Haftklebemassenschichten und gegebenenfalls ein oder mehreren Zwischenträgerschichten, wobei mindestens eine der Haftklebemassenschichten mindestens einen in seine Primärpartikel vereinzelbaren Füllstoff enthält, wobei die Primärpartikel (i) im Wesentlichen sphärisch sind und (ii) einen mittleren Durchmesser d(0,5) gemäß Testmethode 2 von weniger als 10 µm aufweisen. Zudem beträgt das Verhältnis aus mittlerem Durchmesser d(0,5) der Primärpartikel zur Dicke der Haftklebemassenschicht, in der die Primärpartikel enthalten sind, weniger als 1:2 und mindestens eine Haftklebemassenschicht auf Vinylaromatenblockcopolymer basiert, wobei das Vinylaromatenblockcopolymer (i) Polymerblöcke überwiegend gebildet durch Polymerisation von Vinylaromaten (A-Blöcke), bevorzugt Styrol, und gleichzeitig (ii) Polymerblöcke überwiegend gebildet durch Polymerisation von konjugierten Dienen mit 4 bis 18 C-Atomen und/oder Isobutylen (B-Blöcke), bevorzugt von 1,3-Dienen wie zum Beispiel Butadien, enthält, wobei die B-Blöcke optional mindestens teilweise, wie zum Beispiel vollständig, hydriert sind, und wobei der Haftklebestreifen eine Dicke von weniger als 500 µm aufweist.

Die erfindungsgemäß verwendeten Füllstoffe erhöhen die Reißerbeständigkeit des Haftklebestreifens, während die klebtechnischen Eigenschaften, wie der Tack oder die Klebkraft, und die Schockresistenz, wie die Durchschlagzähigkeit oder Querschlagzähigkeit, typischerweise im Wesentlichen unverändert bleiben, was überraschend und vorteilhaft ist. Typischerweise senken die erfindungsgemäßen Füllstoffe den Tack, die Klebkraft, die Durchschlagzähigkeit und/oder die Schockresistenz des Haftklebestreifens um höchstens 30%, vorzugsweise höchstens 20%, und insbesondere höchstens 10% gegenüber dem Haftklebestreifen, der den besagten Füllstoff nicht enthält bei ansonsten identischer Zusammensetzung. Mit dem Begriff "Tack" ist erfindungsgemäß insbesondere der Probetack gemeint. Die erfindungsgemäßen Füllstoffe haben auch den Vorteil einer einfachen Handhabbarkeit und Dosierbarkeit. Bevorzugte Ausführungsformen des Haftklebestreifens befinden sich in den Unteransprüchen.

Die vorliegende Erfindung betrifft ferner ein Verfahren zur Herstellung eines erfindungsgemäßen Haftklebestreifens, wobei der Haftklebestreifen mittels eines lösungsmittelbasierten Beschichtungsverfahrens oder Hotmeltbeschichtungsverfahrens hergestellt wird.

Die vorliegende Erfindung betrifft außerdem die Verwendung mindestens einer Haftklebemasse, die mindestens einen in seine Primärpartikel vereinzelbaren Füllstoff enthält, wobei die Primärpartikel (i) im Wesentlichen sphärisch sind und (ii) einen mittleren Durchmesser d(0,5) von weniger als 10 µm aufweisen, in einem Haftklebestreifen, der sich durch dehnendes Verstrecken im Wesentlichen in der Verklebungsebene rückstands- und zerstörungsfrei wieder ablösen lässt, aus ein oder mehreren Haftklebemassenschichten und gegebenenfalls ein oder mehreren Zwischenträgerschichten, wobei das Verhältnis aus mittlerem Durchmesser d(0,5) der Primärpartikel zur Dicke der Haftklebemassenschicht, in der die Primärpartikel enthalten sind, weniger als 1:2 beträgt, wobei mindestens eine Haftklebemassenschicht auf Vinylaromatenblockcopolymer basiert, wobei das Vinylaromatenblockcopolymer (i) Polymerblöcke überwiegend gebildet durch Polymerisation von Vinylaromaten (A-Blöcke), bevorzugt Styrol, und gleichzeitig (ii) Polymerblöcke überwiegend gebildet durch Polymerisation von konjugierten Dienen mit 4 bis 18 C-Atomen und/oder Isobutylen (B-Blöcke), bevorzugt von 1,3-Dienen wie zum Beispiel Butadien, enthält, wobei die B-Blöcke optional mindestens teilweise, wie zum Beispiel vollständig, hydriert sind.

Die Erfindung betrifft auch die Verwendung eines erfindungsgemäßen Haftklebstreifens zur Verklebung von elektronischen Bauteilen wie insbesondere Akkus und elektronischen Geräten wie insbesondere Handys.

Unter einer Haftklebemasse bzw. einem Haftklebstoff wird erfindungsgemäß, wie im allgemeinen Sprachgebrauch üblich, ein Stoff verstanden, der zumindest bei Raumtemperatur dauerhaft klebrig sowie klebfähig ist. Charakteristisch für einen Haftklebstoff ist, dass er durch Druck auf ein Substrat aufgebracht werden kann und dort haften bleibt, wobei der aufzuwendende Druck und die Einwirkdauer dieses Drucks nicht näher definiert werden. Im Allgemeinen, grundsätzlich jedoch abhängig von der genauen Art des Haftklebstoffs, der Temperatur und der Luftfeuchtigkeit sowie des Substrats, reicht die Einwirkung eines kurzfristigen, minimalen Drucks, der über eine leichte Berührung für einen kurzen Moment nicht hinausgeht, um den Haftungseffekt zu erzielen, in anderen Fällen kann auch eine längerfristige Einwirkdauer eines höheren Drucks notwendig sein.

Haftklebemassen haben besondere, charakteristische viskoelastische Eigenschaften, die zu der dauerhaften Klebrigkeit und Klebfähigkeit führen. Kennzeichnend für sie ist, dass, wenn sie mechanisch deformiert werden, es sowohl zu viskosen Fließprozessen als auch zum Aufbau elastischer Rückstellkräfte kommt. Beide Prozesse stehen hinsichtlich ihres jeweiligen Anteils in einem bestimmten Verhältnis zueinander, abhängig sowohl von der genauen Zusammensetzung, der Struktur und dem Vernetzungsgrad der Haftklebemasse als auch von der Geschwindigkeit und Dauer der Deformation sowie von der Temperatur. Der anteilige viskose Fluss ist zur Erzielung von Adhäsion notwendig. Nur die viskosen Anteile, hervorgerufen durch Makromoleküle mit relativ großer Beweglichkeit, ermöglichen eine gute Benetzung und ein gutes Auffließen auf das zu verklebende Substrat. Ein hoher Anteil an viskosem Fluss führt zu einer hohen Haftklebrigkeit (auch als Tack oder Oberflächenklebrigkeit bezeichnet) und damit oft auch zu einer hohen Klebkraft. Stark vernetzte Systeme, kristalline oder glasartig erstarrte Polymere sind mangels fließfähiger Anteile in der Regel nicht oder zumindest nur wenig haftklebrig.

Die anteiligen elastischen Rückstellkräfte sind zur Erzielung von Kohäsion notwendig. Sie werden zum Beispiel durch sehr langkettige und stark verknäuelte sowie durch physikalisch oder chemisch vernetzte Makromoleküle hervorgerufen und ermöglichen die Übertragung der auf eine Klebverbindung angreifenden Kräfte. Sie führen dazu, dass eine Klebverbindung einer auf sie einwirkenden Dauerbelastung, zum Beispiel in Form einer dauerhaften Scherbelastung, in ausreichendem Maße über einen längeren Zeitraum standhalten kann.

Zur genaueren Beschreibung und Quantifizierung des Maßes an elastischem und viskosem Anteil sowie des Verhältnisses der Anteile zueinander werden die mittels Dynamisch Mechanischer Analyse (DMA) ermittelbaren Größen Speichermodul (G') und Verlustmodul (G") herangezogen. G' ist ein Maß für den elastischen Anteil, G" ein Maß für den viskosen Anteil eines Stoffes. Beide Größen sind abhängig von der Deformationsfrequenz und der Temperatur.

Die Größen können mit Hilfe eines Rheometers ermittelt werden. Das zu untersuchende Material wird dabei zum Beispiel in einer Platte-Platte-Anordnung einer sinusförmig oszillierenden Scherbeanspruchung ausgesetzt. Bei schubspannungsgesteuerten Geräten werden die Deformation als Funktion der Zeit und der zeitliche Versatz dieser Deformation gegenüber dem Einbringen der Schubspannung gemessen. Dieser zeitliche Versatz wird als Phasenwinkel $\delta$ bezeichnet.

Der Speichermodul G' ist wie folgt definiert: $G' = (\tau/\gamma) \cdot \cos(\delta)$ ($\tau$ = Schubspannung, $\gamma$ = Deformation, $\delta$ = Phasenwinkel = Phasenverschiebung zwischen Schubspannungs- und Deformationsvektor). Die Definition des Verlustmoduls G" lautet: $G" = (\tau/\gamma) \cdot \sin(\delta)$ ($\tau$ = Schubspannung, $\gamma$ = Deformation, $\delta$ = Phasenwinkel = Phasenverschiebung zwischen Schubspannungs- und Deformationsvektor).

Eine Masse gilt im Allgemeinen als Haftklebemasse und wird im Sinne der Erfindung als solche definiert, wenn bei 23°C im Deformationsfrequenzbereich von $10^0$ bis $10^1$ rad/sec sowohl G' als auch G" zumindest zum Teil im Bereich von $10^3$ bis $10^7$ Pa liegen. "Zum Teil" heißt, dass zumindest ein Abschnitt der G'-Kurve innerhalb des Fensters liegt, das durch den Deformationsfrequenzbereich von einschließlich $10^0$ bis einschließlich $10^1$ rad/sec (Abszisse) sowie den Bereich der G'-Werte von einschließlich $10^3$ bis einschließlich $10^7$ Pa (Ordinate) aufgespannt wird, und wenn zumindest ein Abschnitt der G"-Kurve ebenfalls innerhalb des entsprechenden Fensters liegt.

Damit einschlägig bekannte strippfähige Haftklebestreifen leicht und rückstandsfrei wieder abgelöst werden können, müssen sie bestimmte klebtechnische Eigenschaften besitzen: Beim Verstrecken muss die Klebrigkeit der Haftklebestreifen deutlich sinken. Je niedriger die Klebleistung im verstreckten Zustand ist, umso weniger stark wird der Untergrund beim Ablösen beschädigt. Besonders deutlich ist diese Eigenschaft bei Klebemassen auf Basis von Vinylaromatenblockcopolymeren zu erkennen, bei denen in der Nähe der Streckgrenze die Klebrigkeit auf unter 10 % sinkt.

Damit strippfähige Haftklebestreifen leicht und rückstandsfrei wieder abgelöst werden können, müssen sie neben den oben beschriebenen klebtechnischen auch einige bestimmte mechanische Eigenschaften besitzen. Besonders vorteilhaft ist das Verhältnis der Reißkraft und der Strippkraft größer als zwei, bevorzugt größer als drei. Dabei ist die Strippkraft diejenige Kraft, die aufgewendet werden muss, um einen Klebestreifen aus einer Klebfuge durch paralleles Ziehen in Richtung der Verklebungsebene wieder zu lösen. Diese Strippkraft setzt sich aus der Kraft, die wie oben beschrieben für das Ablösen des Klebestreifens von den Verklebungsuntergründen nötig ist, und der Kraft, die zur Verformung des Klebestreifens aufgewendet werden muss, zusammen. Die zur Verformung des Klebestreifens erforderliche Kraft ist abhängig von der Dicke des Haftklebestreifens. Die zum Ablösen benötigte Kraft ist dagegen in dem betrachteten Dickenbereich des Haftklebestreifens (20 bis 3000 $\mu$m) unabhängig von der Dicke der Klebestreifen.

Die leichte und rückstandsfreie Wiederablösbarkeit von strippfähigen Haftklebestreifen lässt sich somit insbesondere über die chemische Zusammensetzung der eingesetzten Haftklebemassen steuern, so dass bei einer geeigneten chemischen Zusammensetzung der Haftklebemasse auch eine dünne Haftklebemasseschicht die gewünschte Wiederablösbarkeit aufweisen kann. Die Wiederablösbarkeit lässt sich außerdem auch über die Dicke des Haftklebestreifens steuern. Ferner kann auch ein geeigneter Zwischenträger die gewünschte Wiederablösbarkeit positiv beeinflussen.

Der erfindungsgemäße Haftklebestreifen weist beim dehnenden Verstrecken bei einem Abzugswinkel von etwa 45° gegenüber der Verklebungsebene typischerweise eine Reißeranfälligkeit von weniger als 50%, vorzugsweise von weniger als 30%, bevorzugter von weniger als 20%, noch bevorzugter von weniger als 10%, und insbesondere von weniger als 5% auf, jeweils bestimmt gemäß Testmethode 9.

In einer weiteren bevorzugten Ausführungsform weist der Haftklebestreifen beim dehnenden Verstrecken bei einem Abzugswinkel von etwa 90° gegenüber der Verklebungsebene vorzugsweise eine Reißeranfälligkeit von weniger als 50%, bevorzugter weniger als 30%, noch bevorzugter von weniger als 20% und insbesondere von weniger als 10% auf, jeweils bestimmt nach Testmethode 9.

Mindestens eine Haftklebemassenschicht des Haftklebestreifens enthält mindestens einen in seine Primärpartikel vereinzelbaren Füllstoff. Unter "in seine Primärpartikel vereinzelbar" wird dabei verstanden, dass die Primärpartikel, sofern sie nicht von vornherein vereinzelt vorliegen, durch Schereinwirkung auf die (Polymer-)Matrix getrennt werden können. Vom Bedeutungsgehalt des Begriffs "in seine Primärpartikel vereinzelbarer Füllstoff" umfasst sind somit auch agglomeriert vorliegende Füllstoffpartikel. "Agglomeriert vorliegend" bedeutet, dass die das Agglomerat bildenden Primärpartikel nur durch schwache, im Regelfall elektrostatische, durch Ladung oder Polarität hervorgerufene Kräfte, zusammengehalten werden. Davon abzugrenzen und nicht vom Bedeutungsgehalt des Begriffs "in seine Primärpartikel vereinzelbar" umfasst sind aggregiert vorliegende Füllstoffpartikel. "Aggregiert vorliegend" bedeutet, dass die das Aggregat bildenden Primärpartikel durch starke, im Regelfall durch kovalente oder ionische Bindungen hervorgerufene Kräfte, zusammengehalten werden. Solche Aggregate lassen sich nur sehr schwierig in kleinere Einheiten aufbrechen, insbesondere nicht durch auf die (Polymer-)Matrix einwirkende Scherkräfte.

Insbesondere umfasst der Füllstoff vereinzelt vorliegende Primärpartikel. Vereinzelt vorliegende Primärpartikel weisen keinen unmittelbaren Kontakt zu einem weiteren Primärpartikel auf. "Unmittelbarer Kontakt" beschreibt dabei ein direktes - nicht durch die Matrix unterbrochenes - Aneinandergrenzen der Grenzflächen zweier Primärpartikel. Insbesondere sind aggregiert vorliegende Primärpartikel nicht von den Begriffen "in seine Primärpartikel vereinzelbar" und "vereinzelt vorliegend" erfasst. Im Speziellen nicht davon erfasst sind verästelte oder dendritische Strukturen, wie sie beispielsweise von pyrogenen Kieselsäuren ausgebildet werden. Die vereinzelte Verteilung der Füllstoffprimärpartikel im Haftklebestreifen kann mit elektronenmikroskopischen Verfahren wie REM (Rasterelektronenmikroskopie) oder TEM (Transmissionselektronenmikroskopie) bestimmt werden.

Unter "Primärpartikeln" werden in Übereinstimmung mit dem fachmännischen Verständnis Füllstoffteilchen verstanden, die mit geeigneten physikalischen Methoden wie Lichtmikroskopie oder Elektronenmikroskopie nach DIN 53206-1: 1972-08 als Individuen erkennbar sind.

Die erfindungsgemäßen Füllstoffpartikel sind bevorzugt nicht aus konzentrischen Schichten aufgebaut. Unter "aus konzentrischen Schichten aufgebaut" wird verstanden, dass vom Mittelpunkt des Partikels ausgehend in jeder Raumrichtung eine Abfolge von Schichten aus jeweils unterschiedlichem Material vorliegt. Bevorzugt lassen sich die erfindungsgemäßen Füllstoffpartikel somit insbesondere von als core-shell-Partikeln bekannten Füllstoffpartikeln abgrenzen, die einen Kern aus einem bestimmten Feststoffmaterial und eine Hülle aus einem davon verschiedenen Feststoffmaterial enthalten. Einschlüsse von Flüssigkeiten oder Gasen sind bei den erfindungsgemäßen Füllstoffpartikeln nicht ausgeschlossen; Flüssigkeiten und Gase gelten nicht als "Schichten" im vorstehenden Sinne. Bevorzugt sind die Primärpartikel des erfindungsgemäßen, in seine Primärpartikel vereinzelbaren Füllstoffs Vollkörper. Im Sinne der vorliegenden Anmeldung gelten zudem oberflächenbehandelte Primärpartikel nicht als Primärpartikel, die aus konzentrischen Schichten aufgebaut sind.

Unter "sphärischen Partikeln" werden Partikel mit einem Aspektverhältnis der Längen von kürzester Achse $L_{min}$ zu längster Achse $L_{max}$ von größer als 0,5 verstanden. Zur Definition dieser Längen das Folgende: Der Mittelpunkt des Partikels sei der geometrische Volumenschwerpunkt. Zur Beschreibung der Sphärizität werden Achsen verglichen, welche durch diesen Mittelpunkt laufen und zwei Punkte auf der Oberfläche des Partikels verbinden. Es gibt mindestens eine kürzeste Achse mit der Länge $L_{min}$ und mindestens eine längste Achse mit der Länge $L_{max}$. Die Sphärizität des Partikels ist nun definiert als das dimensionslose Aspektverhältnis $L_{min} / L_{max}$ und ist größer als 0 (Null) und kleiner oder gleich 1. Bei perfekter Sphärizität erreicht das Verhältnis den Wert 1. Oberflächenrauigkeiten, wie sie üblicherweise bei der Herstellung der Partikel entstehen, sind im Rahmen der hier behandelten Parameter unbeachtlich.

Unter "sphärischen Partikeln" werden gemäß dem Vorstehenden solche verstanden, welche ein Aspektverhältnis > 0,5 aufweisen, bevorzugt > 0,65, besonders bevorzugt > 0,85. Insbesondere sind die Primärpartikel im Wesentlichen kugelförmig, ganz besonders bevorzugt sind sie im Wesentlichen Kugeln.

Geeignete Messmethoden sind je nach Partikelgröße optische Methoden, z.B. CAMSIZER®, Retsch Gmbh, Germany, oder Elektronenmikroskopie.

Erfindungsgemäß sind die Primärpartikel im Wesentlichen sphärisch. Unter "im Wesentlichen" ist dabei gemeint, dass typischerweise mindestens 90 % (d.h. mindestens 90 von 100 Partikeln) der Primärpartikel sphärisch im Sinne der vorstehenden Definition sind. Vorzugsweise sind mindestens 95 % (d.h. mindestens 95 von 100 Primärpartikeln) sphärisch, besonders bevorzugt sind alle Primärpartikel sphärisch.

Vorzugsweise weisen die Primärpartikel des Füllstoffs einen mittleren Durchmesser d(0,5) gemäß Testmethode 2 von 10 nm bis 1 μm, noch bevorzugter von 30 nm bis 500 nm, noch bevorzugter von 50 nm bis 250 nm und insbesondere von 100 bis 200 nm, wie zum Beispiel von 150 nm auf. Ebenso vorzugsweise ist das Verhältnis aus mittlerem Durchmesser d(0,5) der Primärpartikel zur Dicke der Haftklebemassenschicht, in der die Primärpartikel enthalten sind, weniger als 1:5, bevorzugt weniger als 1:10, bevorzugter weniger als 1:30, noch bevorzugter weniger als 1:50 und insbesondere weniger als 1:100. Bei derartigen Partikelgrößen bzw. Verhältnissen von Partikelgröße zu Schichtdicke ergeben sich besonders vorteilhafte Eigenschaftsprofile des Haftklebestreifens, insbesondere hinsichtlich der Reißerbeständigkeit. Schichtdicken bzw. die Dicke von Haftklebestreifen werden erfindungsgemäß nach Testmethode 3 ermittelt.

Der mittlere Durchmesser d(0,5) der Primärpartikel wird erfindungsgemäß mittels Laserbeugung an einer Suspension der Füllstoffpartikel in deionisiertem Wasser bestimmt, auf Basis der Verteilungskurve von anteiligem Volumen aufgetragen über die Partikelgröße (Testmethode 2). Falls die Primärpartikel in der Suspension nicht von vornherein vereinzelt vorliegen, können sie vor der Messung durch Schereinwirkung auf die Suspension getrennt werden. d(0,5) ist dabei definiert als der Wert der Partikelgröße, bei dem die summierten Volumenanteile 0,5, d.h. 50%, erreichen. Insbesondere erfolgt die Bestimmung des mittleren Durchmessers mittels Laserbeugung bei einer Verdunkelung von $17 \pm 1\%$. Der mittlere Durchmesser kann anhand der angegebenen Methode mit handelsüblichen, dafür vorgesehenen Geräten bestimmt werden, beispielsweise mit der "Mastersizer"-Linie der Firma Malvern (z.B. Mastersizer 2000, Mastersizer 3000).

Vorzugsweise sind die Füllstoffpartikel inert. Beispielsweise weisen sie vorzugsweise keine photokatalytischen Eigenschaften auf. Auch weisen sie vorzugsweise einen sehr geringen Anteil ionischer löslicher Bestandteile auf.

Das Material der erfindungsgemäßen Füllstoffpartikel umfasst Kunststoffe, weitere organische, insbesondere auch biobasierte, Verbindungen sowie anorganische, insbesondere glasartige oder keramische Materialien. Bevorzugt bestehen die Primärpartikel des mindestens einen in seine Primärpartikel vereinzelbaren Füllstoffs aus einem anorganischen Material. Insbesondere sind die Partikel Siliziumdioxid-Partikel.

Weiter bevorzugt weisen die Primärpartikel des in seine Primärpartikel vereinzelbaren Füllstoffs keine Oberflächenfunktionalisierung auf. Dies erleichtert vorteilhaft die Herstellung bzw. Bereitstellung dieser Partikel.

Bevorzugt weist der in seine Primärpartikel vereinzelbare Füllstoff eine spezifische Oberfläche (BET) von < 50 $m^2/g$ auf. Ein Sphärizitätsmaß lässt sich auch durch das Verhältnis von spezifischer Oberfläche (BET, in $m^2/g$) zum mittleren Durchmesser d(0,5) (in nm) ausdrücken. Diese Verhältnis beträgt bevorzugt < 1,0 $m^2/(g*nm)$ für die sphärischen Partikel des erfindungsgemäßen Füllstoffs.

Beispiele für kommerziell verfügbare erfindungsgemäße Füllstoffe sind:

- Sidistar® T120U, dessen sphärische amorphe Siliziumdioxid-Primärpartikel einen d(0,5) von 150 nm aufweisen, erhältlich von Elkem ASA. Bei Sidistar® T120U handelt es sich um einen in seine Primärpartikel vereinzelbaren Füllstoff, wobei die Primärpartikel im Wesentlichen sphärisch sind und ferner nicht aus konzentrischen Schichten aufgebaut sind. Das Produkt ermöglicht eine ausgezeichnete Verteilung der Partikel in der Polymermatrix. Dies führt zu einer verbesserten Dispersion aller zusammengesetzten Bestandteile und zu einem besseren Fließverhalten, was höhere Extrusionsgeschwindigkeiten und eine glattere Oberfläche des Endproduktes, d.h. der die Partikel enthaltenden Schicht, ermöglicht. Das Produkt wird in unverdünnter Form geliefert.

- Kronos 2360, dessen sphärische Titandioxid-Primärpartikel einen d(0,5) von etwa 600 nm aufweisen, erhältlich von Kronos. Bei KRO 2360 handelt es sich ebenfalls um einen in seine Primärpartikel vereinzelbaren Füllstoff, wobei die Primärpartikel im Wesentlichen sphärisch sind.

- SiLibeads, d.h. polierte runde Glasvollkugeln aus Kalknatronglas, einer Größenverteilung (Durchmesser) von 0 bis 20 $\mu$m, wobei der mittlere Durchmesser d(0,5) 7 $\mu$m beträgt. Die Sphärizität beträgt >= 0,89. Dieser SiLibeads-Typ ist daher erfindungsgemäß. Die Silibeads werden von der Sigmund Lindner Gmbh bezogen. Bei Silibeads handelt es sich ebenfalls um in seine Primärpartikel vereinzelbare Füllstoffe, wobei die Primärpartikel im Wesentlichen sphärisch sind und ferner nicht aus konzentrischen Schichten aufgebaut sind.

Der erfindungsgemäße Füllstoff ist in der Haftklebemassenschicht typischerweise zu bis zu 50 Gew.-%, vorzugsweise bis zu 30 Gew.-%, bevorzugter bis zu 25 Gew.-% noch bevorzugter bis zu 20 Gew.-%, und insbesondere bis zu 15 Gew.-%, und vorzugsweise zu mindestens 2 Gew.-%, bevorzugter mindestens 4 Gew.-%, und insbesondere mindestens 7 Gew.-%, jeweils bezogen auf das Gesamtgewicht der Haftklebemassenschicht, enthalten. Derartige Füllstoffgehalte wirken sich insbesondere positiv auf die Reißerbeständigkeit aus. Bei zu hohen Füllstoffgehalten ist zudem mit einer Verschlechterung der klebtechnischen Eigenschaften wie Klebkraft oder Tack zu rechnen. Als Füllstoff kann grundsätzlich auch eine Mischung mehrerer erfindungsgemäßer Füllstoffe eingesetzt werden, wobei sich in diesem Fall die bevorzugten Gewichtsanteile auf die gesamte Menge an erfindungsgemäßem Füllstoff bezieht.

Der erfindungsgemäße Füllstoff ist in mindestens einer Haftklebemassenschicht enthalten. In Mehrschichtaufbauten kann er in einer innenliegenden Schicht und/oder in den außenliegenden Schichten enthalten sein.

In einer bevorzugten Ausführungsform enthalten ein oder mehrere Haftklebemassenschichten, vorzugsweise ein oder mehrere der Haftklebemassenschicht(en), die den in seine Primärpartikel vereinzelbaren Füllstoff enthalten bzw. enthält, einen weiteren vorzugsweise anorganischen Füllstoff, der nicht erfindungsgemäß ist, d.h. der nicht wie in Anspruch 1 definiert ist. Der weitere Füllstoff bzw. die weiteren Füllstoffe sind vorzugsweise zu 5 bis 75 Gew.-%, bezogen auf das Gesamtgewicht der Haftklebemassenschicht, in dieser enthalten.

In einer weiteren bevorzugten Ausführungsform enthalten die ein oder mehreren Haftklebemassenschicht(en), die den in seine Primärpartikel vereinzelbaren Füllstoff enthalten bzw. enthält, keine weiteren Füllstoffe, die nicht erfindungsgemäß sind.

Gemäß der Erfindung basiert mindestens eine Haftklebemasseschicht, vorzugsweise alle Haftklebemasseschichten, des erfindungsgemäßen Haftklebestreifens auf Vinylaromatenblockcopolymer.

Das Vinylaromatenblockcopolymer enthält (i) Polymerblöcke überwiegend gebildet durch Polymerisation von Vinylaromaten (A-Blöcke), bevorzugt Styrol, und gleichzeitig (ii) Polymerblöcke überwiegend gebildet durch Polymerisation von konjugierten Dienen mit 4 bis 18 C-Atomen und/oder Isobutylen (B-Blöcke), bevorzugt von 1,3-Dienen wie zum Beispiel Butadien, wobei die B-Blöcke optional mindestens teilweise, wie zum Beispiel vollständig, hydriert sind. Wenn Polymerblöcke überwiegend gebildet sind durch Polymerisation eines bestimmten Monomers, dann bedeutet dies erfindungsgemäß, dass das besagte Monomer bei der Polymerisation einen molaren Anteil von mehr als 50 Mol.-% hat, wobei mindestens 90 Mol.-% und insbesondere (nahezu) 100 Mol.-% bevorzugt sind.

Vorzugsweise besitzen die Blockcopolymere der Haftklebmassen als A-Blöcke Polystyrolendblöcke. Anstelle der bevorzugten Polystyrolblöcke können als Vinylaromaten auch Polymerblöcke auf Basis anderer aromatenhaltiger Homo- und Copolymere (bevorzugt $C_8$- bis $C_{12}$-Aromaten) mit Glasübergangstemperaturen (gemäß Testmethode 1) von größer 75 °C genutzt werden wie zum Beispiel $\alpha$-methylstyrolhaltige Aromatenblöcke. Weiterhin können auch gleiche oder unterschiedliche A-Blöcke enthalten sein.

Bevorzugte konjugierte Diene als Monomere für den Weichblock B sind insbesondere ausgewählt aus der Gruppe bestehend aus Butadien, Isopren, Ethylbutadien, Phenylbutadien, Piperylen, Pentadien, Hexadien, Ethylhexadien, Dimethylbutadien und den Farnesen-Isomeren sowie beliebigen Mischungen dieser Monomere. Auch der Block B kann als Homopolymer oder als Copolymer vorliegen. Besonders bevorzugt ist das konjugierte Dien als Monomere für den Weichblock B Butadien. Beispielsweise ist der Weichblock B ein Polybutadien oder ein teil- oder vollhydriertes Derivat davon wie insbesondere Polybutylenbutadien.

A-Blöcke werden im Zusammenhang dieser Erfindung auch als "Hartblöcke" bezeichnet. B-Blöcke werden entsprechend auch "Weichblöcke" oder "Elastomerblöcke" genannt. Dies spiegelt die erfindungsgemäße Auswahl der Blöcke entsprechend ihrer Glasübergangstemperaturen gemäß Testmethode 1 (für A-Blöcke typischerweise mindestens 40 °C, insbesondere mindestens 60 °C und für B-Blöcke typischerweise bis zu höchstens -80 °C, insbesondere höchstens -50 °C oder höchstens -20 °C) wider. Diese Angaben beziehen sich auf die reinen, unabgemischten Blockcopolymere.

Typischerweise weist zumindest ein Vinylaromatenblockcopolymer der Haftklebemassenschicht mindestens zwei A-Blöcke und mindestens einen B-Block auf, wie zum Beispiel ein Triblockcopolymer A-B-A. Vorzugsweise enthält das Vinylaromatenblockcopolymer der Haftklebemassenschicht Triblockcopolymer A-B-A, daneben Diblockcopolymer A-B und/oder ferner Multiblockcopolymer, d.h. Blockcopolymer mit mindestens vier Polymerblöcken, umfassend insbesondere mindestens drei A-Blöcke und mindestens einen B-Block (wie zum Beispiel besonders bevorzugt radiale Blockcopolymere). Diblockcopolymere tragen zu Tack und Auffließvermögen der Klebemasse bei. Triblock- und Multiblockcopolymere tragen zu Kohäsion und Zugfestigkeit der Klebemasse bei. Es können mehrere verschiedene Diblockcopolymere eingesetzt werden. Es können mehrere Triblock- und/oder Multiblockcopolymere eingesetzt werden. In einer Haftklebemassenschicht auf Basis von Vinylaromatenblockcopolymer beträgt der Anteil an Diblockcopolymer in Bezug auf den Gesamtblockcopolymergehalt vorzugsweise 10 bis 65 Gew.-%, bevorzugt 12 bis 55 Gew.-%, bevorzugter 15 bis 45 Gew.-% und insbesondere 15 bis 30 Gew.-%. Deutlich höhere Diblockanteile führen typischerweise zu nicht ausreichender Kohäsion, was sich in reduzierter Halteleistung und/oder reduzierter Reißfestigkeit beim unter dehnendem Verstrecken durchgeführten Ablöseprozess äußert. Ein Mindestanteil an Triblock bzw. Multiblock ist also beispielsweise zur Erzielung einer ausreichenden Kohäsion, (Wärme-)Scherfestigkeit und Reißkraft erforderlich. Deutlich geringere Diblockanteile führen zu einem Abfall an Verklebungsfestigkeit, insbesondere auf unpolaren Untergründen wie zum Beispiel unpolarer Anstreichfarbe. Trotzdem kann auf Diblockcopolymere auch komplett verzichtet werden.

In einer besonders bevorzugten Ausführungsform besteht das Vinylaromatenblockcopolymer im Wesentlichen, d.h. zu mindestens 90 Gew.-% wie zum Beispiel vollständig, aus Diblockcopolymer A-B und Triblockcopolymer A-B-A.

In einer weiteren besonders bevorzugten Ausführungsform enthält das Vinylaromatenblockcopolymer radiales Blockcopolymer $(A-B)_nX$ oder $(A-B-A)_nX$, insbesondere $(A-B)_nX$, worin jeweils X für den Rest eines Kopplungsreagenzes oder Initiators und n für eine ganze Zahl $\geq 3$ steht, wobei der Anteil des radialen Blockcopolymers in Bezug auf den Gesamtblockcopolymergehalt vorzugsweise mehr als 10 Gew.-%, bevorzugter mehr als 30 Gew.-% und insbesondere mehr als 50 Gew.-% beträgt. Der radiale Anteil wirkt sich insbesondere positiv auf die Wärmescherfestigkeit aus.

Der Anteil an Vinylaromatenblock in den Blockcopolymeren kann von Blockcopolymersorte zu Blockcopolymersorte in der Formulierung unterschiedlich sein, liegt aber typischerweise bei mindestens 15 Gew.-%, bevorzugt bei mindestens 25 Gew.-% und höchstens bei 40 Gew.-%, bevorzugt höchstens bei 35 Gew.-%. Ein zu geringer Polyvinylaromatenanteil führt zu unzureichender physikalischer Vernetzung, die durch Mikrophasenseparation geschaffen wird. Die physikalische Vernetzung ist für die Halteleistung und die Reißfestigkeit wichtig. Bei einem zu hohen Polyvinylaromatenanteil dagegen verliert die Klebemasse an Klebrigkeit.

In einer Ausführungsform enthält die erfindungsgemäße Haftklebmasseschicht mindestens ein Klebharz. Unter der Bezeichnung "Klebharz", englisch "Tackifier Resin", versteht der Fachmann einen Stoff auf Harzbasis, der die Klebrigkeit erhöht. Im Rahmen der vorliegenden Anmeldung gelten Klebharze nicht als Polymere. Klebharze sind typischerweise oligo- und polymere Verbindungen mit einem zahlenmittleren Molekulargewicht $M_n$ von nicht mehr als 5.000 g/mol. Haftklebemassen auf Vinylaromatenblockcopolymerbasis weisen in der Regel neben dem Vinylaromatenblockcopolymer ferner Klebharz auf, um die Adhäsion in gewünschter Weise zu erhöhen. Das Klebharz sollte mit dem Elastomerblock der Blockcopolymere verträglich sein.

Es wurde gefunden, dass als Klebharz für die Haftklebemasse(n), insbesondere für die Haftklebemasse(n) auf Vinylaromatenblockcopolymerbasis, vorzugsweise unpolare Kohlenwasserstoffharze, zum Beispiel hydrierte und nicht hydrierte Polymerisate des Dicyclopentadiens, nicht hydrierte, partiell, selektiv oder vollständig hydrierte Kohlenwasserstoffharze auf Basis von C5-, C5/C9- oder C9-Monomerströmen, Polyterpenharze auf Basis von $\alpha$-Pinen und/oder $\beta$-Pinen und/oder $\delta$-Limonen vorteilhaft eingesetzt werden können. Vorgenannte Klebharze können sowohl allein als auch im Gemisch eingesetzt werden. Besonders bevorzugt insbesondere für SBS sind Polyterpenharze. Für SIS sind auch hydrierte C5- oder C9-Harze sehr gut geeignet. Dabei können sowohl bei Raumtemperatur feste als auch flüssige Harze zum Einsatz kommen. Klebharze, hydriert oder nicht hydriert, die auch Sauerstoff enthalten, können optional - bei einer Haftklebemasse auf Basis von Vinylaromatenblockcopolymer bevorzugt bis zu einem maximalen Anteil von 25 % bezogen auf die Gesamtmasse der Klebharze in der Klebemasse - eingesetzt werden, so zum Beispiel Kolophonium- und/oder Kolophoniumesterharze und/oder Terpenphenolharze, insbesondere Terpenphenolharze. In einer bevorzugten Ausführungsform sind in den Haftklebemasseschichten 20 bis 60 Gew.-% mindestens eines Klebharzes, bezogen auf das Gesamtgewicht der Selbstklebemasseschicht, bevorzugt 30 bis 50 Gew.-% mindestens eines Klebharzes, bezogen auf das Gesamtgewicht der Haftklebemasseschicht, enthalten. Der Anteil der bei Raumtemperatur optional einsetzbaren Weichmacher wie zum Beispiele flüssigen Harze beträgt gemäß einer bevorzugten Variante bis zu 15 Gew.-%, vorzugsweise bis zu 10 Gew.-% bezogen auf die gesamte Selbstklebemasse. Weichmacher vermögen typischerweise insbesondere die Klebkraft und den Tack zu erhöhen, können sich allerdings nachteilig auf die Kohäsion bzw. Reißerbeständigkeit auswirken. Insbesondere um die Reißerbeständigkeit zu erhöhen, enthalten die erfindungsgemäßen Haftklebemassen in einer bevorzugten Ausführungsform daher keinen Weichmacher wie zum Beispiel flüssiges Harz.

In einer bevorzugten Ausführungsform des erfindungsgemäßen Haftklebestreifens sind ein oder mehrere Schichten Schäume. Mindestens eine Haftklebemassenschicht und/oder Zwischenträgerschicht kann ein Schaum sein, vorzugsweise ist mindestens eine Haftklebemasseschicht ein Schaum. Beispielsweise können ein oder mehrere der Haftklebemassenschicht(en), die den in seine Primärpartikel vereinzelbaren Füllstoff enthalten bzw. enthält, Schäume sein. Schäume können insbesondere die Schockresistenz des Haftklebestreifens erhöhen. In Mehrschichtaufbauten kann eine innenliegende Schicht und/oder können die außenliegenden Schichten ein Schaum sein. Vorzugsweise sind die außenliegenden Schichten ein Schaum, was sich besonders vorteilhaft auf die Schockresistenz auswirken kann und zudem Vorteile bei der Verklebung von unebenen Substraten mit sich bringen kann.

Bei dem Schaum kann es sich sowohl um einen mit Hohlkörpern, insbesondere mit Mikrohohlkörpern, als auch um einen mit Gas erzeugten Schaum handeln. Hohlkörper gelten gemäß der vorliegenden Erfindung dabei nicht als Füllstoffe. Insoweit kann die Schaumschicht - sofern sie mit Hilfe von Hohlkörpern geschäumt ist - ein syntaktischer Schaum sein, ebenso kann sie - sofern sie mit einem Gas geschäumt ist - ein nichtsyntaktischer Schaum sein; auch eine Mischform ist denkbar. Das zur Schäumung gegebenenfalls erforderliche Gas kann bei der Herstellung des Schaums entweder direkt als Treibgas in die Masse eingebracht oder durch chemische Reaktion in der Masse enthaltener Komponenten in dieser erzeugt werden. Bevorzugt ist die Schaumschicht ein mit Mikrohohlkörpern erzeugter Schaum. Die Schaumschicht enthält vorzugsweise Polymerhohlkugeln, Glashohlkugeln, Keramikhohlkugeln, mindestens teilweise expandierte Mikroballons oder ein Gemisch davon, und insbesondere mindestens teilweise expandierte Mikroballons.

Die Dichte einer erfindungsgemäßen Schaumschicht beträgt vorzugsweise 350 bis 990 $kg/m^3$, bevorzugt 450 bis 970 $kg/m^3$, insbesondere 500 bis 900 $kg/m^3$, wie gemäß Testmethode 4 ermittelt.

Unter "Mikroballons" werden elastische und somit in ihrem Grundzustand expandierbare Mikrohohlkugeln verstanden, die eine thermoplastische Polymerhülle aufweisen. Diese Kugeln sind mit niedrigsiedenden Flüssigkeiten oder verflüssigtem Gas gefüllt. Als Hüllenmaterial finden insbesondere Polyacrylnitril, PVDC, PVC oder Polyacrylate Verwendung. Als niedrigsiedende Flüssigkeit sind insbesondere Kohlenwasserstoffe der niederen Alkane, beispielsweise Isobutan oder Isopentan gebräuchlich, die als verflüssigtes Gas unter Druck in der Polymerhülle eingeschlossen sind.

Durch ein Einwirken auf die Mikroballons, insbesondere durch eine Wärmeeinwirkung, erweicht die äußere Polymerhülle. Gleichzeitig geht das in der Hülle befindliche flüssige Treibgas in seinen gasförmigen Zustand über. Dabei dehnen sich die Mikroballons irreversibel aus und expandieren dreidimensional. Die Expansion ist beendet, wenn sich der Innen- und der Außendruck ausgleichen. Da die polymere Hülle erhalten bleibt, erzielt man so einen geschlossenzelligen Schaum.

Der Begriff "zumindest teilweise expandierte Mikroballons" wird erfindungsgemäß so verstanden, dass die Mikroballons zumindest soweit expandiert sind, dass damit eine Dichteverringerung der Masse in einem technisch sinnvollen Ausmaß im Vergleich zu derselben Masse mit den unexpandierten Mikroballons bewirkt wird. Dies bedeutet, dass die Mikroballons nicht zwingend vollständig expandiert sein müssen. Der Ausdruck "zumindest teilweise expandiert" bezieht sich auf den Expansionszustand der individuellen Mikroballons und soll nicht ausdrücken, dass nur ein Teil der in Betracht kommenden Mikroballons (an)expandiert sein muss. Wenn also wie erfindungsgemäß bevorzugt "0,1 bis 10 Gew.-% zumindest teilweise expandierte Mikroballons" in der Masse enthalten sind, dann bedeutet dies, dass sämtliche dieser "0,1 bis 10 Gew.-% zumindest teilweise expandierten Mikroballons" zumindest teilweise expandiert im vorstehenden Sinne sind und unexpandierte Mikroballons nicht zu den "0,1 bis 10 Gew.-% zumindest teilweise expandierten Mikroballons" gehören.

Es ist eine Vielzahl an Mikroballontypen kommerziell erhältlich, welche sich im Wesentlichen über ihre Größe (6 bis 45 $\mu$m Durchmesser im unexpandierten Zustand) und ihre zur Expansion benötigten Starttemperaturen (75 bis 220°C) differenzieren. Ein Beispiel für kommerziell erhältliche Mikroballons sind die Expancel® DU-Typen (DU = dry unexpanded) von der Firma Akzo Nobel. Unexpandierte Mikroballontypen sind auch als wässrige Dispersion mit einem Feststoff- beziehungsweise Mikroballonanteil von ca. 40 bis 45 Gew.-% erhältlich, weiterhin auch als polymergebundene Mikroballons (Masterbatche), zum Beispiel in Ethylenvinylacetat mit einer Mikroballonkonzentration von ca. 65 Gew.-%. Sowohl die Mikroballon-Dispersionen als auch die Masterbatche sind wie die unexpandierten Mikroballons als solche zur Herstellung erfindungsgemäßer Schäume geeignet.

Eine geschäumte Masse kann auch mit sogenannten vorexpandierten Mikroballons erzeugt werden. Bei dieser Gruppe findet die Expansion schon vor der Einmischung in die Polymermatrix statt. Vorexpandierte Mikroballons sind beispielsweise unter der Bezeichnung Dualite® oder mit der Typenbezeichnung Expancel DE (Dry Expanded) von der Firma Akzo Nobel kommerziell erhältlich.

Erfindungsgemäß bevorzugt weisen mindestens 90 % aller von Mikroballons gebildeten Hohlräume einen maximalen Durchmesser von 10 bis 200 $\mu$m, stärker bevorzugt von 15 bis 200 $\mu$m, auf. Unter dem "maximalen Durchmesser" wird die maximale Ausdehnung eines Mikroballons in der beobachteten Ebene verstanden. Die Bestimmung der Durchmesser erfolgt anhand einer Kryobruchkante im Rasterelektronenmikroskop (REM) bei 500-facher Vergrößerung. Von jedem einzelnen Mikroballon wird grafisch der Durchmesser ermittelt.

Der Anteil der Mikroballons in der Masse liegt gemäß einer bevorzugten Ausführungsform der Erfindung bei 0,1 Gew. % bis 10 Gew.-%, bevorzugter 0,25 Gew.-% bis 5 Gew.-%, noch bevorzugter 0,5 bis 3 Gew.-%, und insbesondere 1 bis 2,0 Gew.-%, jeweils bezogen auf die Gesamtzusammensetzung der Masse.

Die erfindungsgemäßen Haftklebmassen können weitere Additive enthalten, um bestimmte Eigenschaften hervorzurufen oder diese stärker auszuprägen. Die erfindungsgemäßen Haftklebmasse, insbesondere solche auf Basis von Vinylaromatenblockcopolymer, können beispielsweise Alterungsschutzmittel (wie primäre oder sekundäre Antioxidantien oder Lichtschutzmittel) enthalten. Denkbar sind beispielsweise auch Plastifizierungsmittel, Verarbeitungsmittel, Endblockverstärkerharze, Farbstoffe, Pigmente, Flammschutzmittel und/oder weitere Polymere von bevorzugt elastomerer Natur. Entsprechend nutzbare Elastomere beinhalten unter anderem solche auf Basis reiner Kohlenwasserstoffe, zum Beispiel ungesättigte Polydiene wie natürliches oder synthetisch erzeugtes Polyisopren oder Polybutadien, chemisch im Wesentlichen gesättigte Elastomere wie zum Beispiel gesättigte Ethylen-Propylen-Copolymere, $\alpha$-Olefincopolymere, Polyisobutylen, Butylkautschuk, Ethylen-Propylenkautschuk, sowie chemisch funktionalisierte Kohlenwasserstoffe wie zum Beispiel halogenhaltige, acrylathaltige, allyl- oder vinyletherhaltige Polyolefine. Zudem können die Haftklebemassen auch Vernetzer enthalten.

In einer bevorzugten Ausführungsform besteht der Haftklebestreifen aus einer einzigen Haftklebemassenschicht. Wie vorstehend beschrieben enthält diese mindestens einen in seine Primärpartikel vereinzelbaren Füllstoff wie in Anspruch 1 definiert. Sie kann zudem weiteren Füllstoff enthalten, der nicht wie in Anspruch 1 definiert ist. Der Haftklebestreifen, der aus einer einzigen Haftklebemassenschicht besteht, ist bevorzugt ein Schaum. Alternativ ist der Haftklebestreifen, der aus einer einzigen Haftklebemassenschicht besteht, nicht geschäumt.

In einer weiteren Ausführungsform besteht der Haftklebestreifen aus mindestens zwei, wie beispielsweise genau drei Schichten. Bei dieser Ausführungsform handelt es sich somit um einen Mehrschichtaufbau. Bei einem Haftklebestreifen aus genau zwei Schichten sind typischerweise zwei Haftklebemassenschichten aufeinander angeordnet. Bei einem Haftklebestreifen aus genau drei Schichten sind typischerweise entweder drei Haftklebemassenschichten aufeinander angeordnet, oder es ist auf den beiden Oberflächen einer Zwischenträgerschicht jeweils eine Haftklebemassenschicht angeordnet. Eine Haftklebemassenschicht ist demzufolge im Sinne der vorliegenden Erfindung keine Zwischenträgerschicht.

In den vorstehend beschriebenen Mehrschichtaufbauten weisen vorzugsweise mindestens eine Schicht, bevorzugter mindestens zwei Schichten eine Dicke von weniger als 50 $\mu$m auf, und gegebenenfalls weist mindestens eine weitere Schicht eine Dicke von mehr als 30 $\mu$m auf. Insbesondere im Bereich der Consumer-Elektronik sind Klebestreifen bevorzugt, die möglichst dünn sind, da die Endgeräte möglichst dünn sein und daher auch alle einzelnen Komponenten wenig Platz beanspruchen sollen.

In den Mehrschichtaufbauten kann mindestens eine Haftklebemassenschicht ein Schaum sein, vorzugsweise die außenliegenden Schichten. Zudem enthält mindestens eine Haftklebemassenschicht mindestens einen in seine Primärpartikel vereinzelbaren Füllstoff wie in Anspruch 1 definiert. Im Dreischichtaufbau enthalten vorzugsweise die innenliegende Haftklebemassenschicht, sowie gegebenenfalls die außenliegenden Schichten besagten Füllstoff. Mindestens eine der Haftklebemassenschichten kann zudem weiteren Füllstoff enthalten, der nicht wie in Anspruch 1 definiert ist.

In einer möglichen Ausführungsform besteht der Haftklebestreifen somit aus zwei außenliegenden geschäumten Haftklebemassenschichten, welche erfindungsgemäßen Füllstoff enthalten, sowie einer nicht geschäumten innenliegenden Haftklebemassenschicht.

In einer weiteren möglichen Ausführungsform besteht der Haftklebestreifen aus zwei außenliegenden geschäumten Haftklebemassenschichten sowie einer nicht geschäumten innenliegenden Haftklebemassenschicht, welche erfindungsgemäßen Füllstoff enthält.

In einer weiteren möglichen Ausführungsform besteht der Haftklebestreifen aus zwei außenliegenden geschäumten Haftklebemassenschichten, welche erfindungsgemäßen Füllstoff enthalten, sowie einer nicht geschäumten innenliegenden Haftklebemassenschicht, welche erfindungsgemäßen Füllstoff enthält.

In einer weiteren möglichen Ausführungsform besteht der Haftklebestreifen aus zwei außenliegenden geschäumten Haftklebemassenschichten, welche erfindungsgemäßen Füllstoff enthalten, sowie einer nicht haftklebrigen Zwischenträgerschicht.

Erfindungsgemäße Haftklebestreifen weisen eine Dicke von weniger als 500 $\mu$m, und insbesondere von weniger als 300 $\mu$m auf.

Optional kann der Haftklebestreifen mindestens einen Zwischenträger umfassen, der entweder in einer Klebemassenschicht oder zwischen zwei Klebemassenschichten angeordnet ist. Dieser ist typischerweise ein Folienträger. Besonders bevorzugt besteht der Zwischenträger nur aus einer einzigen Schicht aus einer Polymerfolie. Die Dicke der Zwischenträgerschicht beträgt typischerweise 10 bis 200 $\mu$m, wie insbesondere 20 bis 60 $\mu$m.

Vom erfinderischen Gedanken umfasst sind Aufbauten mit einem dehnbaren Zwischenträger im Inneren des Haftklebestreifens, wobei die Dehnbarkeit des Zwischenträgers ausreichend sein muss, um ein Ablösen des Klebestreifens durch dehnendes Verstrecken, im Wesentlichen in der Verklebungsebene und typischerweise auch bei einem Abzugswinkel von mindestens 45° gegenüber der Verklebungsebene, zu gewährleisten. Als Zwischenträger können zum Beispiel sehr dehnfähige Folien dienen. Beispiele für vorteilhaft einsetzbare dehnbare Zwischenträger sind transparente Ausführungen aus, DE 10 2012 223670 A1, WO 2009/114683 A1, WO 2010/077541 A1, WO 2010/078396 A1.

Zur Herstellung der Zwischenträgerfolie werden filmbildende oder extrusionsfähige Polymere eingesetzt, die zusätzlich mono- oder biaxial orientiert sein können.

In einer bevorzugten Auslegung werden Polyolefine eingesetzt. Bevorzugte Polyolefine werden aus Ethylen, Propylen, Butylen und/oder Hexylen hergestellt, wobei jeweils die reinen Monomere polymerisiert werden können oder Mischungen aus den genannten Monomeren copolymerisiert werden. Durch das Polymerisationsverfahren und durch die Auswahl der Monomere lassen sich die physikalischen und mechanischen Eigenschaften der Polymerfolie steuern wie zum Beispiel die Erweichungstemperatur und/oder die Reißfestigkeit.

Ferner lassen sich Polyurethane vorteilhaft als Ausgangsmaterialien für dehnbare Zwischenträgerschichten verwenden. Polyurethane sind chemisch und/oder physikalisch vernetzte Polykondensate, die typischerweise aus Polyolen und Isocyanaten aufgebaut werden. Je nach Art und Einsatzverhältnis der einzelnen Komponenten sind dehnbare Materialien erhältlich, die im Sinne dieser Erfindung vorteilhaft eingesetzt werden können. Dem Fachmann sind weitere Rohstoffe bekannt, aus denen erfindungsgemäße Zwischenträgerschichten aufgebaut werden können. Weiterhin ist es vorteilhaft, Kautschuk basierende Materialien in Zwischenträgerschichten einzusetzen, um Dehnbarkeit zu realisieren. Als Kautschuk oder Synthesekautschuk oder daraus erzeugten Verschnitten als Ausgangsmaterial für dehnbare Zwischenträgerschichten kann der Naturkautschuk grundsätzlich aus allen erhältlichen Qualitäten wie zum Beispiel Crepe-, RSS-, ADS-, TSR- oder CV-Typen, je nach benötigtem Reinheits- und Viskositätsniveau, und der Synthesekautschuk oder die Synthesekautschuke aus der Gruppe der statistisch copolymerisierten Styrol-Butadien-Kautschuke (SBR), der Butadien-Kautschuke (BR), der synthetischen Polyisoprene (IR), der Butyl-Kautschuke (IIR), der halogenierten Butyl-Kautschuke (XIIR), der Acrylat-Kautschuke (ACM), der Ethylenvinylacetat-Copolymere (EVA) und der Polyurethane und/oder deren Verschnitten gewählt werden.

Besonders vorteilhaft einsetzbar als Materialien für dehnbare Zwischenträgerschichten sind Blockcopolymere. Dabei sind einzelne Polymerblöcke kovalent miteinander verknüpft. Die Blockverknüpfung kann in einer linearen Form vorliegen, aber auch in einer sternförmigen oder Pfropfcopolymervariante. Ein Beispiel für ein vorteilhaft einsetzbares Blockcopolymer ist ein lineares Triblockcopolymer, dessen zwei endständige Blöcke eine Glasübergangstemperatur von mindestens 40 °C, bevorzugt mindestens 70 °C aufweisen und dessen Mittelblock eine Glasübergangstemperatur von höchstens 0 °C, bevorzugt höchstens -30 °C aufweist. Höhere Blockcopolymere, etwa Tetrablockcopolymere sind ebenfalls einsetzbar. Wichtig ist, dass zumindest zwei Polymerblöcke gleicher oder verschiedener Art im Blockcopolymer enthalten sind, die eine Glasübergangstemperatur jeweils von mindestens 40 °C, bevorzugt mindestens 70 °C aufweisen und die über zumindest einen Polymerblock mit einer Glasübergangstemperatur von höchstens 0 °C, bevorzugt höchstens -30 °C in der Polymerkette voneinander separiert sind. Die Glasübergangstemperaturen werden jeweils gemäß Testmethode 1 bestimmt. Beispiele für Polymerblöcke sind Polyether wie zum Beispiel Polyethylenglykol, Polypropylenglykol oder Polytetrahydrofuran, Polydiene, wie zum Beispiel Polybutadien oder Polyisopren, hydrierte Polydiene, wie zum Beispiel Polyethylenbutylen oder Polyethylenpropylen, Polyester, wie zum Beispiel Polyethylenterephthalat, Polybutandioladipat oder Polyhexandioladipat, Polycarbonat, Polycaprolacton, Polymerblöcke vinylaromatischer Monomere, wie zum Beispiel Polystyrol oder Poly-[α]-Methylstyrol, Polyalkylvinylether, Polyvinylacetat, Polymerblöcke [α],[β]-ungesättigter Ester wie insbesondere Acrylate oder Methacrylate. Dem Fachmann sind entsprechende Glasübergangstemperaturen bekannt. Alternativ schlägt er sie beispielsweise im Polymer Handbook [J. Brandrup, E. H. Immergut, E. A. Grulke (Hrsg.), Polymer Handbook, 4. Aufl. 1999, Wiley, New York] nach. Polymerblöcke können aus Copolymeren aufgebaut sein.

Zur Herstellung eines Zwischenträgermaterials kann es auch hier angebracht sein, Additive und weitere Komponenten hinzuzugeben, die die filmbildenden Eigenschaften verbessern, die Neigung zur Ausbildung von kristallinen Segmenten vermindern und/oder die mechanischen Eigenschaften gezielt verbessern oder auch gegebenenfalls verschlechtern.

Des Weiteren sind bahnförmige Schaumstoffe (beispielsweise aus Polyethylen und Polyurethan) geeignet.

Die Zwischenträger können mehrlagig ausgestaltet sein. Des Weiteren können die Zwischenträger Deckschichten aufweisen, beispielsweise Sperrschichten, die ein Eindringen von Komponenten aus der Klebemasse in den Zwischenträger oder umgekehrt unterbinden. Diese Deckschichten können auch Barriereeigenschaften haben, um so ein Durchdiffundieren von Wasserdampf und/oder Sauerstoff zu verhindern.

Zur besseren Verankerung der Haftklebemassen auf dem Zwischenträger können die Zwischenträger mit den bekannten Maßnahmen wie Corona, Plasma oder Flammen vorbehandelt werden. Auch die Nutzung eines Primers ist möglich. Idealerweise kann aber auf eine Vorbehandlung verzichtet werden. Die Rückseite des Zwischenträgers kann einer antiadhäsiven physikalischen Behandlung oder Beschichtung unterzogen sein.

Die Spannung des Zwischenträgers bei 50 % Dehnung, gemäß Testmethode 5, sollte vorzugsweise kleiner als 20 N/cm sein, bevorzugt kleiner als 10 N/cm, um ein einfaches Ablösen ohne allzu großen Kraftaufwand zu ermöglichen. Zudem weist der Zwischenträger typischerweise eine Reißdehnung, gemäß Testmethode 5, von mindestens 100 %, vorzugsweise mindestens 300 %, und gegebenenfalls ein Rückstellvermögen, gemäß Testmethode 6, von über 50 % auf.

Schließlich kann der Haftklebestreifen ein- oder beidseitig mit einem Liner, also einem temporären Träger, der beidseitig antiadhäsiv beschichtet ist, eingedeckt sein. Ein Liner (Trennpapier, Trennfolie) ist nicht Bestandteil eines Haftklebestreifens, sondern nur ein Hilfsmittel zu dessen Herstellung, Lagerung oder für die Weiterverarbeitung durch Stanzen. Darüber hinaus ist ein Liner im Gegensatz zum Zwischenträger nicht fest mit einer Klebstoffschicht verbunden.

Typische Konfektionierformen der erfindungsgemäßen Haftklebestreifen sind Klebebandrollen sowie Klebestreifen wie sie zum Beispiel in Form von Stanzlingen erhalten werden. Vorzugsweise weisen alle Schichten im Wesentlichen die Form eines Quaders auf. Weiter vorzugsweise sind alle Schichten vollflächig miteinander verbunden. Optional kann ein nicht haftklebriger Anfasserbereich vorgesehen sein, von welchem aus der Ablöseprozess ausgeführt werden kann. Der allgemeine Ausdruck "Klebeband" umfasst im Sinne dieser Erfindung alle flächigen Gebilde wie in zwei Dimensionen ausgedehnte Folien oder Folienabschnitte, Bänder mit ausgedehnter Länge und begrenzter Breite, Bandabschnitte, Stanzlinge, Etiketten und dergleichen. In der vorliegenden Erfindung werden die Begriffe "Haftklebestreifen" und "Klebeband" auch synonym verwendet.

Die Klebkraft des Haftklebestreifens beträgt in einer bevorzugten Ausführungsform auf mindestens einer Seite, vorzugsweise auf beiden Seiten, weniger als 29 N/cm, insbesondere weniger als 20 N/cm.

In einer weiteren bevorzugten Ausführungsform ist der Haftklebestreifen transparent. "Transparenz" bedeutet im Sinne der vorliegenden Anmeldung eine mittlere Transmission des zu untersuchenden Musters wie eines Haftklebestreifens bzw. einer Haftklebemassenschicht im sichtbaren Bereich des Lichts von mindestens 75 %, bevorzugt höher als 90 %, wobei sich diese Betrachtung auf unkorrigierte Transmission, also ohne Grenzflächenreflexionsverluste herauszurechnen, bezieht (siehe Testmethode 15).

Die Herstellung und Verarbeitung der Haftklebemassen kann sowohl aus der Lösung als auch aus der Schmelze (Hotmelt) erfolgen. Das Aufbringen der Haftklebemassen auf eine Zwischenträgerschicht, eine weitere Haftklebemassenschicht oder einen Liner kann durch direkte Beschichtung oder durch Laminierung, insbesondere Heißlaminierung erfolgen.

Im Lösungsmittelverfahren werden typischerweise alle Komponenten in einem geeigneten Lösungsmittel(gemisch) gelöst, wobei sich zum Beispiel ein Feststoffgehalt gemäß Testmethode 7 von 25 - 55 Gew.-% ergeben kann. Gegebenenfalls werden Mikroballons vorgeschlämmt und zugeben. Die Lösung bzw. Dispersion kann anschließend, beispielsweise auf einem Laborstreichtisch, ausgestrichen werden, beispielsweise unter Verwendung eines Messers oder einer Rakel. Anschließend erfolgt Trocknung, typischerweise in einem Ofen, bei beispielsweise 100 °C für 15 min, und gegebenenfalls Vernetzung. Anschließend können mindestens zwei Lappenmuster übereinander laminiert werden, um eine höhere Schichtdicke zu erzielen. Falls die Haftklebemassenschicht expandierbare Mikroballons enthält, werden diese bei einer geeigneten Temperatur zumindest teilweise expandiert, so dass sich ein Schaum ergibt. Übliche großindustrielle Verfahren würden diese Schritte analog durchführen mittels Trockenkanälen.

Im Hotmeltverfahren werden alle Komponenten, beispielsweise mittels Hotmelt-Kneter, Doppelschneckenextruder oder Planetwalzenextruder, zu einer homogenen Masse vermischt. Doppelschneckenextruder und Planetwalzenextruder können auch in Kombination eingesetzt werden.

Die Haftklebemasse kann zum Beispiel in einem kontinuierlichen Mischaggregat wie zum Beispiel einem Planetwalzenextruder (PWE) hergestellt werden. Dazu werden die Edukte, die die Klebemasse bilden sollen, in den Planetwalzenextruder aufgegeben. Gleichzeitig werden gegebenenfalls expandierbare Mikroballons während des Compoundierprozesses in die Haftklebemasse homogen eingearbeitet. Die erforderlichen Temperaturen zur homogenen Herstellung der Haftklebemasse und zur Expansion der Mikroballons sind so aufeinander abgestimmt, dass die Mikroballons während des Mischens zumindest beginnen zu expandieren und bevorzugt beim Austritt aus dem PWE durch den Druckabfall bei Düsenaustritt in der Haftklebemasse aufschäumen und dabei die Masseoberfläche durchbrechen. Ein geeignetes Gerät ist beispielsweise der Planetwalzenextruder der Firma Entex in Bochum.

In einem alternativen Verfahren wird die Haftklebemasse ebenfalls in einem Planetwalzenextruder (PWE) hergestellt. Dazu werden die Edukte, die die Klebemasse bilden sollen, in den Planetwalzenextruder aufgegeben. Anschließend werden die expandierbaren Mikroballons in einem zweiten Mischaggregat wie zum Beispiel einem Zweischneckenextruder homogen in die Selbstklebemasse eingearbeitet, oberhalb der Expansionstemperatur erhitzt und geschäumt. Dazu wird die aus den Edukten gebildete Klebemasse hier in einen Zweischneckenextruder aufgegeben, gleichzeitig werden die Mikroballons eingefüllt. Der Zweischneckenextruder weist über die Lauflänge beispielsweise insgesamt vier Heizzonen auf. Ein geeignetes Gerät ist beispielsweise ein Zweischneckenextruder der Firma Kiener.

Die jeweils erhaltene homogene Masse kann mittels Presse auf die gewünschte Schichtdicke ausgepresst werden. Die Beschichtung kann alternativ über Kalanderwalzen, beispielsweise zur Ausformung zwischen zwei Linern, als Düsenbeschichtung beispielsweise auf einen Liner (Düse auf Kühlwalze und Verstreckung) erfolgen.

Anhand der nachfolgend beschriebenen Beispiele werden besonders vorteilhafte Ausführungen der Erfindung näher erläutert, ohne damit die Erfindung unnötig einschränken zu wollen.

## Beispiele

Kommerziell erhältliche, eingesetzte Chemikalien (siehe nachstehende Tabelle 1)

Tabelle 1.

| Chemische Verbindung | Handelsname | Hersteller | CAS-Nr. |
|---|---|---|---|
| Radiales Styrol-Butadien-Blockcopolymer; mit 16 Gew.-% Diblock; Blockpolystyrolgehalt: 23 Gew.-% | Kraton D1116 | Kraton Polymers | 9003-55-8 |
| Lineares Styrol-Butadien-Styrol-Triblockcopolymer; mit 78 Gew.-% Diblock; Blockpolystyrolgehalt: 33 Gew.-% | Kraton D1118 | Kraton Polymers | 9003-55-8 |
| Lineares Styrol-Butadien-Styrol-Triblockcopolymer; mit 15 Gew.-% Diblock; Blockpolystyrolgehalt: 29 Gew.-% | Kraton D1152 | Kraton Polymers | 9003-55-8 |
| festes $\alpha$-Pinen-Klebharz mit einer Ring und Ball-Erweichungstemperatur von 112 bis 118 °C und einem DACP von 27 °C | Piccolyte A115 | Pinova | 31393-98-3 |
| Flüssiges Kohlenwasserstoffharz | Wingtack 10 | Cray Valley | 26813-14-9 |
| Pentaerithrit-tetrakis-[3-(3,5-di-tert.butyl-4-hydroxyphenyl) propionat] | Irganox 1010 | BASF SE | 6683-19-8 |
| Tris(2,4-di-tert-butylphenyl)phosphit | Irgafos 168 FF | BASF SE | 31570-04-4 |
| Mikroballons (unexpandierte Mikrosphären) | Expancel 920 DU 20 | Expancel Nobel Industries | |
| Sphärisches amorphes Siliziumdioxid (96-99% SiOs); BET Oberfläche 20 m$^2$/g; mittlerer Durchmesser d(0,5) = 150 nm | Sidistar T120U | Elkem | 69012-64-2 |
| SiLibeads Glaskugeln, polierte runde Glasvollkugeln aus Kalknatronglas; mittlerer Durchmesser d(0,5) = 7 $\mu$m; Schüttgewicht 0,7 kg/dm$^3$; Sphärizität >= 0,89 (Verhältnis Breite zu Länge) | SiLiBeads 0 - 20 $\mu$m (Artikelnummer 5209) | Sigmund Lindner Gmbh, Germany | 65997-17-3 |

(fortgesetzt)

| Chemische Verbindung | Handelsname | Hersteller | CAS-Nr. |
|---|---|---|---|
| SiLibeads Glaskugeln, polierte runde Glasvollkugeln aus Kalknatronglas; Schüttgewicht 0,7 kg/dm$^3$; Sphärizität >= 0,89 (Verhältnis Breite zu Länge) | SiLiBeads40 - 70 µm (Artikelnummer 5211) | Sigmund Lindner Gmbh, Germany | 65997-17-3 |
| SiLibeads Glaskugeln, polierte runde Glasvollkugeln aus Kalknatronglas; Schüttgewicht 0,7 kg/dm$^3$; Sphärizität >= 0,89 (Verhältnis Breite zu Länge) | SiLiBeads 90 - 150 µm (Artikelnummer 5213) | Sigmund Lindner Gmbh, Germany | 65997-17-3 |
| Sphärische TiOs-Partikel, TiOs-Gehalt >= 90,5%, mittlerer Durchmesser d(0,5) = 600 nm | Kronos 2360 | Kronos | 13463-67-7 |
| Hydrophile pyrogene Kieselsäure, spezifische Oberfläche = 170 bis 210 m$^2$/g, $SiO_2$-Gehalt (bez. auf die geglühte Substanz) >= 99,8%, Durchmesser (Primärpartikel) gemäß REM (Kryobruchkante) etwa 12 nm, Durchmesser (Sekundärpartikel, d.h. Aggregate, nicht in Primärpartikel vereinzelbar) gemäß REM (Kryobruchkante) in der Größenordnung von 100 nm | Aerosil® 200 | Aerosil® | 112945-52-5 7631-86-9 |
| mit Hexadecylsilan nachbehandelte pyrogene Kieselsäure, spezifische Oberfläche = 200 m$^2$/g, $SiO_2$-Gehalt (bez. auf die geglühte Substanz) > 99,8%, Durchmesser (Primärpartikel) gemäß REM (Kryobruchkante) etwa 12 nm, Durchmesser (Sekundärpartikel, d.h. Aggregate, nicht in Primärpartikel vereinzelbar) gemäß REM (Kryobruchkante) in der Größenordnung von 100 nm | Aerosil® R816 | Aerosil® | 199876-45-4 |
| Schichtsilikat, d.h. nicht sphärisch, sondern schichtförmig | Garamite 1958 | Byk Additives and Instruments | 68953-58-2 |

Prüfmethoden

Alle Messungen wurden, sofern nichts anderes angegeben ist, bei 23 °C und 50 % rel. Luftfeuchtigkeit durchgeführt. Die mechanischen und klebtechnischen Daten wurden wie folgt ermittelt:
Testmethode 1: Glasübergangstemperatur ($T_g$)

Glasübergangspunkte - synonym als Glasübergangstemperaturen bezeichnet - werden angegeben als Ergebnis von Messungen mittels Dynamischer Differenzkalorimetrie DDK (englisch Dynamic Scanning Calorimetry; DSC) gemäß der DIN 53 765; insbesondere Abschnitte 7.1 und 8.1, jedoch mit einheitlichen Heiz- und Kühlraten von 10 K/min in allen Heiz- und Kühlschritten (vergleiche DIN 53 765; Abschnitt 7.1; Anmerkung 1). Die Probeneinwaage beträgt 20 mg.

Testmethode 2: mittlerer Partikeldurchmesser d(0,5)

Der mittlere Durchmesser d(0,5) von Primärpartikeln wird mittels Laserbeugung an einer Suspension der Partikel in deionisiertem Wasser bestimmt, auf Basis der Verteilungskurve von anteiligem Volumen aufgetragen über die Partikelgröße. Falls die Primärpartikel in der Suspension nicht von vornherein vereinzelt vorliegen, können sie vor der Messung durch Schereinwirkung auf die Suspension getrennt werden. d(0,5) ist dabei definiert als der Wert der Partikelgröße, bei dem die summierten Volumenanteile 0,5, d.h. 50%, erreichen. Es handelt sich beim mittleren Durchmesser d(0,5) somit um einen volumengemittelten Durchmesser. Die Bestimmung des mittleren Durchmessers erfolgt mittels Laserbeugung bei einer Verdunkelung von 17 ±1%. Der mittlere Durchmesser kann anhand der angegebenen Methode mit handelsüblichen, dafür vorgesehenen Geräten bestimmt werden, beispielsweise mit der "Mastersizer"-Linie der Firma Malvern (z.B. Mastersizer 2000, Mastersizer 3000).

Testmethode 3: Dicke

Die Dicke einer Schicht oder eines Haftklebestreifens lässt sich über handelsübliche Dickenmessgeräte (Taster-Prüfgeräte) mit Genauigkeiten von weniger als 1 $\mu$m Abweichung ermitteln. Sofern Dickenschwankungen festgestellt werden, wird der Mittelwert von Messungen an mindestens drei repräsentativen Stellen angegeben, also insbesondere nicht gemessen an Kniffen, Falten, Stippen und dergleichen.

Testmethode 4: Dichte

Die Dichte von Schichten wird ermittelt durch Quotientenbildung aus Flächengewicht und Dicke der Schicht. Die Dicke der Schicht wird gemäß Testmethode 3 bestimmt.

Testmethode 5: Reißdehnung, die Zugfestigkeit und die Spannung bei 50 % Dehnung

Die Reißdehnung, die Zugfestigkeit und die Spannung bei 50 % Dehnung werden in Anlehnung an DIN 53504 unter Verwendung von Schulterstäben der Größe S3 bei einer Separationsgeschwindigkeit von 300 mm pro Minute gemessen. Das Prüfklima beträgt 23 °C und 50 % rel. Luftfeuchtigkeit.

Testmethode 6: Rückstellvermögen beziehungsweise Elastizität

Zur Messung des Rückstellvermögens wird das zu prüfende Muster um 100 % gedehnt, in dieser Dehnung für 30 s gehalten und dann entspannt. Nach einer Wartezeit von 1 min wird erneut die Länge gemessen.

Das Rückstellvermögen berechnet sich nun wie folgt: $RV = ((L_{100} - L_{end})/L_0) \cdot 100$ mit
RV= Rückstellvermögen in %
$L_{100}$:Länge des Klebestreifens nach der Dehnung um 100 %
$L_0$:Länge des Klebestreifens vor der Dehnung
$L_{end}$:Länge des Klebestreifens nach der Relaxation von 1 min.

Das Rückstellvermögen entspricht dabei der Elastizität.

Testmethode 7: Feststoffgehalt

Der Feststoffgehalt ist ein Maß für den Anteil an nicht verdampfbaren Bestandteilen in einer Haftklebemasse. Er wird gravimetrisch bestimmt, indem man die Haftklebmasse einwiegt, dann für 2 Stunden bei 120 °C im Trockenschrank die verdampfbaren Anteile abdampft und den Rückstand zurückwiegt.

Testmethode 8: Masseauftrag

Der Masseauftrag einer Haftklebmassenschicht in g/m$^2$ kann durch Bestimmung der Masse eines bezüglich seiner Länge und seiner Breite definierten Abschnitts einer solchen auf einen Träger bzw. Liner aufgetragenen Klebemassenschicht bestimmt werden, abzüglich der (bekannten oder separat ermittelbaren) Masse eines Abschnitts gleicher Dimensionen des verwendeten Trägers bzw. Liners. Eventuell vorhandene Lösungsmittel bleiben dabei unberücksichtigt.

Testmethode 9: Reißeranfälligkeit

Aus dem zu untersuchenden Haftklebestreifen werden 100 Streifen in 10 mm Breite und 40 mm Länge gestanzt. Diese Streifen werden auf einer Länge von 30 mm auf eine mit Ethanol gereinigte PC-Platte geklebt, so dass ein 10 mm langer Anfasser übersteht. Eine zweite PC-Platte wird auf die zweite Seite der verklebten Streifen geklebt und zwar so, dass die beiden PC-Platten bündig übereinander liegen. Der Verbund wird mit einer 4 kg Rolle 10-fach überrollt (fünfmal hin und zurück). Nach 24 h Aufziehzeit werden die 100 Streifen am Anfasser manuell bei einem Abzugswinkel von

a) etwa 45° gegenüber der Verklebungsebene, oder alternativ
b) etwa 90° gegenüber der Verklebungsebene, oder alternativ
c) etwa 0° gegenüber der Verklebungsebene, d.h. im Wesentlichen in der Verklebungsebene,
aus der Klebfuge gestrippt.

Es wird bewertet, wie viele der 100 Muster beim Strippen im gewählten Winkel reißen, wobei die Angabe in % erfolgt.

Testmethode 10: Tack (Probetack)

Mit der Probe-Tack-Methode wird das Klebverhalten eines beidseitig klebenden Klebebandes, d.h. Haftklebestreifens, mittels eines "Texture Analyser TA.XT2i" von Stable Mikro Systems charakterisiert.

Bei der Methode wird eine Sonde mit zylindrischem Stempel aus Stahl mit vorgegebener Testgeschwindigkeit bis zu einer definierten Andruckkraft senkrecht auf die Klebmasse gefahren und nach einer definierten Kontaktzeit wieder mit ebenfalls vorgegebener Geschwindigkeit abgezogen. Während dieses Vorganges wird die zum Andrücken beziehungsweise Ablösen aufgewendete Kraft als Funktion des Weges registriert.

- Gerät:

  o Texture Analyser TA.XT2i von SMS (Stable Micro Systems Ltd.) oder
  o Texture Analyser TA.XT plus von SMS (Stable Micro Systems Ltd.) Messkopf / Kraftsonde: 5 kg mit Messbereich: 0,001 bis 50 N

- Tackstempel:
  Standard: Zylinder (rostfreier Stahl): Ø 2 mm
- Prüfklima:
  Standard: 23 $\pm$ 1 °C / 50 $\pm$ 5 % rel. Feuchte

Die zu messende Probe wird blasenfrei und definiert durch 3-faches Hin- und Herrollen einer 2 kg-Rolle mit 150 mm/s einer Stahlplatte verklebt. Der Stahlstempel wird in Aceton gereinigt und für 30 min bei RT konditioniert. Das Trennpapier wird erst unmittelbar vor der Messung vom Klebstreifen entfernt.

Die Stahlplatte wird in dem Probentisch festgeschraubt und unter dem Stempel justiert.

Die zu wählenden Prüfparameter sind folgende:

- Tackstempel: Zylinder (VA-Stahl): Ø 2 mm
- Vorgeschwindigkeit (Pre-test Speed): 0,1 mm/s
- Testgeschwindigkeit (Test Speed): 0,1 mm/s
- Trigger Force: 0,05 N
- Abzugsgeschwindigkeit (Post Test Speed): 1,5 mm/s
- Kontaktzeit (Time): 0,01 sek
- Andruckkraft (Force): 1 N

Vor jeder Einzelmessung muss der Probentisch unter der Sonde positioniert und festgeschraubt werden. Der Abstand zwischen den Messorten beträgt das Dreifache des Durchmessers des Stempels.

Je Probe werden 10 Einzelmessungen zur Berechnung des Mittelwerts durchgeführt. Zwischen den Einzelmessungen wird der Stempel in der Regel nicht gereinigt, es sei denn, es treten Ablagerungen am Stempel auf, oder die Messreihe zeigt einen deutlichen Trend. Es erfolgt eine Mittelwertbildung aus den vorgenommenen Messungen.

Aus der Messkurve (graphische Darstellung der Kraft [N] als Funktion des Weges [mm]) wird die Maximalkraft bestimmt, dieser Wert wird als Probe Tack bezeichnet.

Testmethode 11: 180 ° Klebkrafttest

Die Prüfung der Schälfestigkeit (Klebkraft) erfolgt in Anlehnung an PSTC-1. Ein 1 cm breiter Streifen eines Klebebandes, bestehend aus (i) einer 23 μm dicken PET-Folie und (ii) einem darauf aufgebrachten Haftklebstreifen in Form eines doppelseitigen Klebebands wie in der vorliegenden Anmeldung beschrieben, wird auf dem Prüfuntergrund in Form einer ASTM-Stahlplatte, deren Oberfläche vorher mit Aceton gereinigt wurde, durch fünfmaliges doppeltes Überrollen mittels einer 4 kg Rolle verklebt. Die Platte wird eingespannt und das Klebeband über sein freies Ende an einer Zugprüfmaschine mit einer Geschwindigkeit von 300 mm/min und in einem Schälwinkel von 180 ° von der Platte abgezogen, wobei die dafür notwendige Kraft ermittelt wird. Die Messergebnisse sind in N/cm angegeben (d.h. normiert auf die Breite des Klebebands) und sind gemittelt aus drei Messungen.

Testmethode 12: Querschlagzähigkeit (DuPont-Test in der x,y-Ebene)

Aus dem zu untersuchenden Haftklebestreifen wird eine quadratische, rahmenförmige Probe ausgeschnitten (Außenmaße 33 mm × 33 mm; Stegbreite 2,0 mm; Innenmaße (Fensterausschnitt) 29 mm × 29 mm). Diese Probe wird auf einen PC-Rahmen (Außenmaße 45 mm × 45 mm; Stegbreite 10 mm; Innenmaße (Fensterausschnitt) 25 mm × 25 mm; Dicke 3 mm) geklebt. Auf der anderen Seite des Haftklebestreifens wird ein PC-Fenster von 35 mm × 35 mm geklebt. Die Verklebung von PC-Rahmen, Klebebandrahmen und PC-Fenster erfolgt derart, dass die geometrischen Zentren und die Diagonalen jeweils übereinanderlagen (Eck-auf-Eck). Die Verklebungsfläche beträgt 248 mm². Die Verklebung wird für 5 s mit 248 N gepresst und für 24 Stunden konditioniert bei 23 °C / 50 % relativer Feuchte gelagert.

Unmittelbar nach der Lagerung wird der Klebeverbund aus PC-Rahmen, Haftklebestreifen und PC-Scheibe mit den überstehenden Kanten des PC-Rahmens derart in eine Probenhalterung gespannt, dass der Verbund senkrecht ausgerichtet ist. Die Probenhalterung wird anschließend in die vorgesehene Aufnahme des "DuPont Impact Tester" zentrisch eingesetzt. Der 150 g schwere Schlagkopf wird so eingesetzt, dass die rechteckförmige Aufschlaggeometrie mit den Maßen von 20 mm × 3 mm auf die nach oben gerichtete Stirnseite des PC-Fensters zentrisch und bündig aufliegt.

Auf den so angeordneten Verbund aus Probenhalterung, Probe und Schlagkopf wird senkrecht ein an zwei Führungsstangen geführtes Gewicht mit einer Masse von 150 g aus einer Höhe von 5 cm fallengelassen (Messbedingungen 23 °C, 50 % relative Feuchte).

Die Höhe des Fallgewichtes wird in 5 cm Schritten so lange erhöht, bis die eingebrachte Stoßenergie die Probe durch die Querschlagbelastung zerstört und das PC-Fenster sich vom PC-Rahmen löst.

Um Versuche mit unterschiedlichen Proben vergleichen zu können, wird die Energie wie folgt berechnet:

$$E~[J] = \text{Höhe [m]} * \text{Masse Gewicht [kg]} * 9{,}81~kg/m*s^2$$

Es werden fünf Proben pro Produkt getestet und der Energiemittelwert als Kennzahl für die Querschlagzähigkeit angegeben.

Testmethode 13: Durchschlagzähigkeit (DuPont-Test in der z-Ebene)

Aus dem zu untersuchenden Haftklebstreifen wird eine quadratische, rahmenförmige Probe ausgeschnitten (Außenmaße 33 mm × 33 mm; Stegbreite 2,0 mm; Innenmaße (Fensterausschnitt) 29 mm × 29 mm). Diese Probe wird auf einen Polycarbonat-(PC)-Rahmen (Außenmaße 45 mm × 45 mm; Stegbreite 10 mm; Innenmaße (Fensterausschnitt) 25 mm × 25 mm; Dicke 3 mm) geklebt. Auf der anderen Seite des Haftklebestreifens wird ein PC-Fenster von 35 mm × 35 mm geklebt. Die Verklebung von PC-Rahmen, Klebebandrahmen und PC-Fenster erfolgt derart, dass die geometrischen Zentren und die Diagonalen jeweils übereinanderliegen (Eck-auf-Eck). Die Verklebungsfläche beträgt 248 mm². Die Verklebung wird für 5 s mit 248 N gepresst und für 24 Stunden konditioniert bei 23 °C / 50 % relativer Feuchte gelagert.

Unmittelbar nach der Lagerung wird der Klebeverbund aus PC-Rahmen, Haftklebestreifen und PC-Fenster mit den überstehenden Kanten des PC-Rahmens derart in eine Probenhalterung gespannt, dass der Verbund waagerecht ausgerichtet ist. Dabei liegt der PC-Rahmen an den überstehenden Kanten auf der Probenhalterung plan auf, so dass das PC-Fenster unterhalb des PC-Rahmens frei schwebend (durch das Klebebandmuster gehalten) vorliegt. Die Probenhalterung wird anschließend in die vorgesehene Aufnahme des "DuPont Impact Tester" zentrisch eingesetzt. Der 150 g schwere Schlagkopf wird so eingesetzt, dass die kreisförmige Aufschlaggeometrie mit dem Durchmesser 24 mm auf die von oben frei zugängliche Fläche des PC-Fensters zentrisch und bündig aufliegt.

Auf den so angeordneten Verbund aus Probenhalterung, Probe und Schlagkopf wird senkrecht ein an zwei Führungsstangen geführtes Gewicht mit einer Masse von 150 g aus einer Höhe von 5 cm fallengelassen (Messbedingungen 23 °C, 50 % relative Feuchte).

Die Höhe des Fallgewichtes wird in 5 cm Schritten so lange erhöht, bis die eingebrachte Stoßenergie die Probe durch die Durchschlagbelastung zerstört und das PC-Fenster sich vom PC-Rahmen löst.

Um Versuche mit unterschiedlichen Proben vergleichen zu können, wird die Energie wie folgt berechnet:

$$E~[J] = \text{Höhe [m]} * \text{Masse Gewicht [kg]} * 9{,}81~kg/m*s^2$$

Es werden fünf Proben pro Produkt getestet und der Energiemittelwert als Kennzahl für die Durchschlagzähigkeit angegeben.

Testmethode 14: Oberflächenrauigkeit $R_a$

Die Oberflächenrauigkeit $R_a$ wird mittels Lasertriangulation bestimmt. Das verwendete PRIMOS System besteht aus einer Beleuchtungseinheit und einer Aufnahmeeinheit. Die Beleuchtungseinheit projiziert mit Hilfe eines digitalen Mikro-Spiegel-Projektors Linien auf die Oberfläche. Diese projizierten, parallelen Linien werden durch die Oberflächenstruktur abgelenkt beziehungsweise moduliert. Für die Registrierung der modulierten Linien wird eine, in einem bestimmten Winkel, dem so genannten Triangulationswinkel, angeordnete CCD-Kamera eingesetzt.

Messfeldgröße: 14,5 × 23,4 mm$^2$
Profillänge: 20,0 mm
30 Flächenrauheit: 1,0 mm vom Rand entfernt (Xm = 21,4 mm; Ym = 12,5 mm)
Filterung: Polynomfilter 3. Ordnung

Die Oberflächenrauigkeit $R_a$ stellt die durchschnittliche Höhe der Rauheit dar, insbesondere die durchschnittliche Absolutentfernung von der Mittellinie (Regressionslinie) des Rauheitsprofils innerhalb des Auswertungsbereichs. Anders ausgedrückt ist $R_a$ die arithmetische Mittenrauigkeit, d.h. der arithmetische Mittelwert aller Profilwerte des Rauheitsprofils.

Zu beziehen sind entsprechende Messgeräte unter anderem bei der GFMesstechnik GmbH in Teltow.

Testmethode 15: Transmission

Zur Probenvorbereitung wird das zu untersuchende Muster wie insbesondere der Haftklebestreifen bzw. die Haftklebemassenschicht blasenfrei auf eine Polycarbonat-Folie (125 μm Lexan 8010 mit frisch ausgedeckten Oberflächen) aufgebracht. Die Transmission des Musters wird über das VIS-Spektrum bestimmt. Die Aufnahme des VIS-Spektrums wird an einem UVIKON 923 der Firma Kontron durchgeführt. Der Wellenlängenbereich des gemessenen Spektrums umfasst alle Wellenlängen zwischen 800 nm und 400 nm bei einer Auflösung von 1 nm. Es wird eine Leerkanalmessung als Referenz über den gesamten Wellenlängenbereich durchgeführt. Für die Angabe des Ergebnisses werden die Transmissionsmessungen im angegebenen Bereich gemittelt. Eine Korrektur von Grenzflächenreflektionsverlusten wird nicht vorgenommen.

Herstellung der Haftklebestreifen

(a) Beispiele 1 bis 7: einschichtige Haftklebestreifen auf Basis von Vinylaromatenblockcopolymer (Rezeptur 1), hergestellt nach dem Hotmeltverfahren

Im nicht erfindungsgemäßen Beispiel 5 wurden 380 g Kraton D1152, 120 g Kraton D1118, 460 g Piccolyte A 115, 30 g Wingtack 10, 5,0 g Irgafos 168 FF, 5,0 g Irganox 1010 (Rezeptur 1) mittels Hotmelt-Kneter für 2 Stunden bei 170°C zu einer homogenen Masse vermischt und mittels Presse zwischen zwei 75 μm dicken PET-Linern auf eine Schichtdicke von 150 μm ausgepresst, so dass sich ein einschichtiger transparenter Haftklebstreifen ohne Füllstoff ergab.

Die erfindungsgemäßen Beispiele 1 bis 4 unterscheiden sich von Beispiel 5 lediglich dadurch, dass den in Beispiel 5 genannten Komponenten zusätzlich unterschiedliche Mengen an Sidistar T120U zugegeben wurden. So wurden 2,5 Gew.-% (Beispiel 1), 5 Gew.-% (Beispiel 2), 7,5 Gew.-% (Beispiel 3) bzw. 10 Gew.-% (Beispiel 4) Sidistar T120U zugegeben, wobei sich die Gewichtsanteile von Sidistar T120U hier jeweils auf das Gesamtgewicht der weiteren Komponenten beziehen (d.h. das Gewicht der weiteren Komponenten wird als 100% festgesetzt). Es ergab sich jeweils ein einschichtiger transparenter Haftklebestreifen, der erfindungsgemäßen Füllstoff enthält.

Die nicht erfindungsgemäßen Beispielen 6 und 7 unterscheiden sich von Beispiel 5 lediglich dadurch, dass den in Beispiel 5 genannten Komponenten zusätzlich 5 Gew.-% Garamite 1958 (Beispiel 6) bzw. 7,5 Gew.-% Aerosil® 200 zugegeben wurden, wobei sich die Gewichtsanteile von Garamite 1958 bzw. Aerosil® 200 hier jeweils auf das Gesamtgewicht der weiteren Komponenten beziehen (d.h. das Gewicht der weiteren Komponenten wird als 100% festgesetzt). Es ergab sich jeweils ein einschichtiger transparenter Haftklebestreifen, der nicht erfindungsgemäßen Füllstoff enthält.

(b) Beispiele 8 - 10 und 24 bis 27: einschichtiger Haftklebestreifen auf Basis von Vinylaromatenblockcopolymer (Rezeptur 3), hergestellt nach dem Hotmeltverfahren

Im erfindungsgemäßen Beispiel 9 wurden 380 g Kraton D1152, 120 g Kraton D1118, 460,0 g Piccolyte A 115, 30 g Wingtack 10, 30,0 g Kronos 2360, 5 g Irganox 1010, 5,0 g Irgafos 168 FF (Rezeptur 3) mittels Hotmelt-Kneter für 2 Stunden bei 170°C zu einer homogenen Masse vermischt und mittels Presse zwischen zwei 75 μm dicken PET-Linern auf eine Schichtdicke von 150 μm ausgepresst, so dass sich ein weißer einschichtiger Haftklebstreifen ergab, der erfindungsgemäßen Füllstoff enthält.

Zum Vergleich wurden die Beispiele 8 und 10 durchgeführt. Das erfindungsgemäße Beispiel 8 unterscheidet sich von Beispiel 9 lediglich dadurch, dass anstelle von 30,0 g Kronos 2360 die gleiche Menge (30 g) Sidistar T120U zugegeben wurde. Es ergab sich somit letztlich ein transparenter einschichtiger Haftklebestreifen, der ebenfalls erfindungsgemäßen Füllstoff enthält. Das nicht erfindungsgemäße Beispiel 10 unterscheidet sich von Beispiel 9 lediglich dadurch, dass 30,0 g Kronos 2360 weggelassen wurde, d.h. kein Füllstoff verwendet wurde. Es ergab sich somit letztlich ein transparenter einschichtiger Haftklebestreifen, der keinen Füllstoff enthält.

Das erfindungsgemäße Beispiel 24 unterscheidet sich von Beispiel 9 lediglich dadurch, dass zusätzlich 5 Gew.-% Sidistar T120U zugegeben wurden, wobei sich der Gewichtsanteil von Sidistar T120U auf das Gesamtgewicht der weiteren Komponenten bezieht (d.h. das Gewicht der weiteren Komponenten wird als 100% festgesetzt). Es ergab sich somit letztlich ein weißer einschichtiger Haftklebestreifen, der ebenfalls erfindungsgemäßen Füllstoff enthält. Die Beispiele 25 (erfindungsgemäß) und 26 bis 27 (nicht erfindungsgemäß) unterscheiden sich von Beispiel 9 lediglich dadurch, dass zusätzlich 5 Gew.-% SiLibeads, 0 - 20 $\mu$m (Beispiel 25), 5 Gew.-% SiLibeads, 40 - 70 $\mu$m (Beispiel 26) bzw. 5 Gew.-% SiLibeads, 90 - 150 $\mu$m (Beispiel 27) zugegeben wurden, wobei sich der Gewichtsanteil der SiLibeads jeweils auf das Gesamtgewicht der weiteren Komponenten bezieht (d.h. das Gewicht der weiteren Komponenten wird als 100% festgesetzt). Es ergab sich jeweils ein weißer einschichtiger Haftklebestreifen, der Füllstoff enthält.

(c) Beispiele 11 bis 17: einschichtige Haftklebestreifen auf Basis von Vinylaromatenblockcopolymer (Rezeptur 2), hergestellt nach dem Lösungsmittelverfahren

Im nicht erfindungsgemäßen Beispiel 14 wurde zuerst eine 40 bis 55 gew.-%ige Klebelösung in einem Lösungsmittelgemisch von Benzin/Toluol/Aceton (worin die Lösungsmittel in der genannten Reihenfolge im Gewichtsverhältnis von 69 : 20 : 11 eingesetzt wurden) hergestellt von 380 g Kraton D1152, 120 g Kraton D1118, 460 g Piccolyte A 115, 30 g Wingtack 10, 5,0 g Irgafos 168 FF, 5,0 g Irganox 1010 (Rezeptur 2). Die erhaltene Klebelösung wurde dann mit einem Streichbalken auf einen PET-Liner, ausgerüstet mit einem trennenden Silikon, in der gewünschten Schichtdicke ausgestrichen, anschließend wurde bei 100 °C für 15 min das Lösungsmittel abgedampft und so die Masseschicht getrocknet. Es ergab sich eine transparente Haftklebemassenschicht, die keinen Füllstoff enthält. Der Massenauftrag wurde dabei so gewählt, dass die Haftklebemassenschicht eine Dicke von 75 $\mu$m aufwies. Anschließend wurden zwei derartige Haftklebemassenschichten aufeinander laminiert, so dass sich ein transparenter einschichtiger Haftklebestreifen mit einer Dicke von 150 $\mu$m ergab, der keinen Füllstoff enthält.

Die erfindungsgemäßen Beispiele 11 bis 13 unterscheiden sich von Beispiel 14 lediglich dadurch, dass den in Beispiel 14 genannten Komponenten zusätzlich unterschiedliche Mengen an Sidistar T120U zugegeben wurden. So wurden 2,5 Gew.-% (Beispiel 11), 5 Gew.-% (Beispiel 12) bzw. 7,5 Gew.-% (Beispiel 13) Sidistar T120U zugegeben, wobei sich die Gewichtsanteile von Sidistar T120U hier jeweils auf das Gesamtgewicht der weiteren Komponenten beziehen (ohne Berücksichtigung des Lösungsmittelgemischs, d.h. das Trockengewicht der weiteren Komponenten wird als 100% festgesetzt). Es ergab sich jeweils ein transparenter einschichtiger Haftklebestreifen mit einer Dicke von 150 $\mu$m, der erfindungsgemäßen Füllstoff enthält.

Die nicht erfindungsgemäßen Beispiele 15 bis 17 unterscheiden sich von Beispiel 14 lediglich dadurch, dass den in Beispiel 14 genannten Komponenten zusätzlich unterschiedliche Mengen an Aerosil® R816 zugegeben wurden. So wurden 2,5 Gew.-% (Beispiel 15), 5 Gew.-% (Beispiel 16) bzw. 7,5 Gew.-% (Beispiel 17) Aerosil® R816 zugegeben, wobei sich die Gewichtsanteile von Aerosil® R816 hier jeweils auf das Gesamtgewicht der weiteren Komponenten beziehen (ohne Berücksichtigung des Lösungsmittelgemischs, d.h. das Trockengewicht der weiteren Komponenten wird als 100% festgesetzt). Es ergab sich jeweils ein transparenter einschichtiger Haftklebestreifen mit einer Dicke von 150 $\mu$m, der nicht erfindungsgemäßen Füllstoff enthält.

(d) Beispiele 18 bis 23: dreischichtige Haftklebestreifen auf Basis von Vinylaromatenblockcopolymer

Im nicht erfindungsgemäßen Beispiel 20 wurden 500,0 g Kraton D1152, 485,0 g Piccolyte A 115, 5,0 g Irganox 1010, 5,0 g Irgafos 168 FF (Rezeptur 4) mittels Hotmelt-Kneter für 2 Stunden bei 170°C zu einer homogenen Masse vermischt und mittels Presse zwischen zwei 75 $\mu$m dicken PET-Linern auf eine Schichtdicke von 100 $\mu$m ausgepresst, so dass sich eine transparente Haftklebemassenschicht ergab, die keinen Füllstoff enthält.

Ferner wurde eine 36 gew.-%ige Klebelösung in einem Lösungsmittelgemisch von Benzin/Toluol/Aceton (worin die Lösungsmittel in der genannten Reihenfolge im Gewichtsverhältnis von 65 : 25 : 10 eingesetzt wurden) hergestellt von 200 g Kraton D1116, 300 g Kraton D1118, 490 Piccolyte A 115, 5 g Irgafos 168 FF, 5 g Irganox 1010 (Rezeptur 6). Die erhaltene Klebelösung wurde anschließend mit 15 g unexpandierten Mikroballons Expancel 920 DU20 versetzt, wobei die Mikroballons als Anschlämmung in Aceton eingesetzt wurden. Die erhaltene Mischung wurde dann mit einem Streichbalken bei einem Masseauftrag von 17 g/m$^2$ (Lösungsmittel unberücksichtigt) auf einen PET-Liner, ausgerüstet mit einem trennenden Silikon, ausgestrichen, anschließend wurde bei 100 °C für 15 min das Lösungsmittel abgedampft und so die Masseschicht getrocknet. Es ergab sich eine Haftklebemassenschicht, die unexpandierte Mikroballons enthält.

Auf die freie Oberfläche der so hergestellten Haftklebemassenschicht, die unexpandierte Mikroballons enthält, wurde die vorstehend beschriebene transparente Haftklebemassenschicht kaschiert, die keinen Füllstoff enthält. Auf die zweite Oberfläche der transparenten Haftklebemassenschicht wurde die freie Oberfläche einer zweiten Haftklebemassenschicht enthaltend unexpandierte Mikroballons, die wie vorstehend beschrieben hergestellt worden ist, kaschiert, so dass ein ungeschäumter symmetrischer Dreischichtverbund aus der innenliegenden transparenten Haftklebemassensschicht, die keinen Füllstoff enthält, und zwei mit Linern versehenen Haftklebemasseschichten enthaltend unexpandierte Mikroballons resultierte.

Nach dem Trocknen wurde der Dreischichtaufbau für 30 s bei 170 °C zwischen den beiden Linern im Ofen geschäumt, woraus außenliegende Haftklebemassenschichten mit Dicken von jeweils etwa 25 $\mu$m resultierten. Durch das Schäumen zwischen zwei Linern sind Produkte mit besonders glatten Oberflächen erhältlich (Oberflächenrauigkeit $R_a$ kleiner 15 $\mu$m).

Die erfindungsgemäßen Beispiele 18 und 19 unterscheiden sich von Beispiel 20 lediglich dadurch, dass bei der Herstellung der transparenten Haftklebemassenschicht den genannten Komponenten zusätzlich unterschiedliche Mengen an Sidistar T120U zugegeben wurden. So wurden 2,5 Gew.-% (Beispiel 18) bzw. 5 Gew.-% (Beispiel 19) Sidistar T120U zugegeben, wobei sich die Gewichtsanteile von Sidistar T120U hier jeweils auf das Gesamtgewicht der weiteren Komponenten beziehen (d.h. das Gewicht der weiteren Komponenten wird als 100% festgesetzt). Es ergab sich jeweils ein dreischichtiger Haftklebestreifen, dessen innenliegende Haftklebemassenschicht erfindungsgemäßen Füllstoff enthält und dessen außenliegende Haftklebemassenschichten geschäumt sind.

Im nicht erfindungsgemäßen Beispiel 23 wurden 380 g Kraton D1152, 120 g Kraton D1118, 460 g Piccolyte A 115, 30 g Wingtack 10, 5,0 g Irgafos 168 FF, 5,0 g Irganox 1010 (Rezeptur 1) mittels Hotmelt-Kneter für 2 Stunden bei 170°C zu einer homogenen Masse vermischt und mittels Presse zwischen zwei 75 $\mu$m dicken PET-Linern auf eine Schichtdicke von 100 $\mu$m ausgepresst, so dass sich eine transparente Haftklebemassenschicht ergab, die keinen Füllstoff enthält.

Ferner wurde eine 36 gew.-%ige Klebelösung in einem Lösungsmittelgemisch von Benzin/Toluol/Aceton (worin die Lösungsmittel in der genannten Reihenfolge im Gewichtsverhältnis von 65 : 25 : 10 eingesetzt wurden) hergestellt von 200 g Kraton D1116, 300 g Kraton D1118, 490 g Piccolyte A 115, 5 g Irgafos 168 FF, 5 g Irganox 1010 (Rezeptur 6). Die erhaltene Klebelösung wurde anschließend mit 15 g unexpandierten Mikroballons Expancel 920 DU20 versetzt, wobei die Mikroballons als Anschlämmung in Aceton eingesetzt wurden. Die erhaltene Mischung wurde dann mit einem Streichbalken bei einem Masseauftrag von 17 g/m$^2$ (Lösungsmittel unberücksichtigt) auf einen PET-Liner, ausgerüstet mit einem trennenden Silikon, ausgestrichen, anschließend wurde bei 100 °C für 15 min das Lösungsmittel abgedampft und so die Masseschicht getrocknet. Es ergab sich eine Haftklebemassenschicht, die unexpandierte Mikroballons enthält.

Auf die freie Oberfläche der so hergestellten Haftklebemassenschicht, die unexpandierte Mikroballons enthält, wurde die vorstehend beschriebene transparente Haftklebemassenschicht kaschiert, die keinen Füllstoff enthält. Auf die zweite Oberfläche der transparenten Haftklebemassenschicht wurde die freie Oberfläche einer zweiten Haftklebemassenschicht enthaltend unexpandierte Mikroballons, die wie vorstehend beschrieben hergestellt worden ist, kaschiert, so dass ein ungeschäumter symmetrischer Dreischichtverbund aus der innenliegenden transparenten Haftklebemassensschicht, die keinen Füllstoff enthält, und zwei mit Linern versehenen Haftklebemasseschichten enthaltend unexpandierte Mikroballons resultierte.

Nach dem Trocknen wurde der Dreischichtaufbau für 30 s bei 170 °C zwischen den beiden Linern im Ofen geschäumt, woraus außenliegende Haftklebemassenschichten mit Dicken von jeweils etwa 25 $\mu$m resultierten. Durch das Schäumen zwischen zwei Linern sind Produkte mit besonders glatten Oberflächen erhältlich (Oberflächenrauigkeit $R_a$ kleiner 15 $\mu$m).

Die erfindungsgemäßen Beispiele 21 und 22 unterscheiden sich von Beispiel 23 lediglich dadurch, dass bei der Herstellung der transparenten Haftklebemassenschicht den genannten Komponenten zusätzlich unterschiedliche Mengen an Sidistar T120U zugegeben wurden. So wurden 2,5 Gew.-% (Beispiel 21) bzw. 5 Gew.-% (Beispiel 22) Sidistar T120U zugegeben, wobei sich die Gewichtsanteile von Sidistar T120U hier jeweils auf das Gesamtgewicht der weiteren Komponenten beziehen (d.h. das Gewicht der weiteren Komponenten wird als 100% festgesetzt). Es ergab sich jeweils ein dreischichtiger Haftklebestreifen, dessen innenliegende Haftklebemassenschicht erfindungsgemäßen Füllstoff enthält und dessen außenliegende Haftklebemassenschichten geschäumt sind.

Versuchsergebnisse

Die als erfindungsgemäß bezeichneten Haftklebestreifen lassen sich durch dehnendes Verstrecken im Wesentlichen in der Verklebungsebene, d.h. bei einem Abzugswinkel von etwa 0°, rückstands- und zerstörungsfrei wieder ablösen.

Tabelle 2 zeigt mechanische und klebtechnische Eigenschaften der einschichtigen Haftklebestreifen auf Basis von Vinylaromatenblockcopolymer (Rezeptur 1), hergestellt nach dem Hotmeltverfahren.

Tabelle 2.

| Beispiel | Reißeranfälligkeit (45°) [%] | Reißeranfälligkeit (90°) [%] | Tack [N] | Klebkraft [N/cm] | DuPont x,y [J] | DuPont z [J] |
|---|---|---|---|---|---|---|
| 1 | 25 | 79 | 3,7 | 17,3 | 0,9 | 0,5 |
| 2 | 13 | 54 | 3,4 | 16,6 | 0,9 | 0,5 |
| 3 | 8 | 29 | 3,9 | 16,7 | 0,9 | 0,6 |
| 4 | 0 | 13 | 4,2 | 17,0 | 0,9 | 0,6 |
| 5 | 79 | 98 | 3,7 | 16,4 | 1,0 | 0,6 |
| 6 | 33 | 25 | 1,1 | 11,4 | 0,7 | 0,2 |
| 7 | 96 | 100 | 2,6 | 14,2 | | |

Ein Vergleich der Beispiele 1 bis 4 mit Beispiel 5 zeigt, dass die erfindungsgemäßen sphärischen Füllstoffpartikel Sidistar T120U die Reißeranfälligkeit des Haftklebestreifens deutlich verringern, sowohl bei einem Abzugswinkel von 45°, als auch bei einem Abzugswinkel von 90°. Zudem werden die klebtechnischen Eigenschaften wie der Tack und die Klebkraft nicht wesentlich beeinträchtigt. Gleiches gilt für die Schockresistenz. Die Beispiele 1 bis 4 zeigen zudem, dass sich die Reißeranfälligkeit auch über den Füllstoffgehalt einstellen lässt.

Beispiel 6 zeigt zudem, dass das Schichtsilikat Garamite 1959, das somit nicht sphärisch ist, zwar die Reißeranfälligkeit absenkt, jedoch zu nicht akzeptablen klebtechnischen Eigenschaften (Tack, Klebkraft) des Haftklebestreifens führt.

Beispiel 7 zeigt, dass Aerosil® 200, und damit nicht in seine Primärpartikel vereinzelbarer Füllstoff, insbesondere bewirkt, dass der Haftklebestreifen spröde wird. Die Reißeranfälligkeit ist sogar höher als ohne Füllstoff. Zudem ist eine signifikante Verschlechterung von Tack und Klebkraft zu erkennen. Aufgrund dieser unzureichenden Werte wurde von einer weiteren Untersuchung der Muster (Schockresistenz) abgesehen.

(b) die Tabellen 3a und 3b zeigen mechanische bzw. klebtechnische Eigenschaften der einschichtigen Haftklebestreifen auf Basis von Vinylaromatenblockcopolymer (Rezeptur 3), hergestellt nach dem Hotmeltverfahren.

Tabelle 3a.

| Beispiel | Reißeranfälligkeit (45°) [%] | Reißeranfälligkeit (90°) [%] |
|---|---|---|
| 8 | 17 | 67 |
| 9 | 49 | 100 |
| 10 | 78 | 100 |

Ein Vergleich von Beispiel 9 mit Beispiel 10 zeigt, dass sich auch mit anderen sphärischen Füllstoffpartikeln, wie zum Beispiel dem Titandioxid Kronos 2360, die Reißeranfälligkeit reduzieren lässt. Ein Vergleich von Beispiel 9 mit Beispiel 8 zeigt zudem, dass das Ersetzen von Titandioxid Kronos 2360 durch die gleiche Menge Sidistar T120U nochmals eine deutliche Reduzierung der Reißeranfälligkeit bewirkt.

Tabelle 3b.

| Beispiel | Reißeranfälligkeit (45°) [%] | Reißeranfälligkeit (90°) [%] | Tack [N] | Klebkraft [N/cm] | DuPont x,y [J] | DuPont z [J] |
|---|---|---|---|---|---|---|
| 24 | 8 | 17 | 4,0 | 12,2 | 0,9 | 0,5 |
| 25 | 9 | 25 | 3,9 | 11,8 | 0,9 | 0,5 |
| 26 | 22 | 67 | 3,9 | 11,0 | 0,9 | 0,4 |
| 27 | 44 | 89 | 3,6 | 11,0 | 0,8 | 0,3 |
| 9 | 52 | 100 | 4,0 | 13,6 | 0,9 | 0,5 |

Den Einfluss der Füllstoffpartikelgröße auf die Reißeranfälligkeit verdeutlichen die Beispiele 24 bis 27. Daraus wird ersichtlich, dass bei gleichem Füllstoffanteil kleinere Partikel offensichtlich die Reißeranfälligkeit deutlich stärker absenken können als vergleichsweise große Partikel. Kleinere Partikel beeinflussen zudem die adhäsiven Eigenschaften wie Klebkraft und Tack sowie die Schockresistenz weniger als vergleichsweise große Partikel.

(c) die Tabellen 4a und 4b zeigen mechanische und klebtechnische Eigenschaften der einschichtigen Haftklebestreifen auf Basis von Vinylaromatenblockcopolymer (Rezeptur 2), hergestellt nach dem Lösungsmittelverfahren.

Tabelle 4a.

| Beispiel | Reißeranfälligkeit (45°) [%] | Reißeranfälligkeit (90°) [%] | Tack [N] | Klebkraft [N/cm] | DuPont x,y [J] | DuPont z [J] |
|---|---|---|---|---|---|---|
| 11 | 4 | 13 | 4,1 | 15,0 | 1,0 | 0,5 |
| 12 | 0 | 8 | 3,6 | 15,5 | 0,9 | 0,5 |
| 13 | 0 | 0 | 3,3 | 14,9 | 0,8 | 0,5 |
| 14 | 45 | 85 | 3,9 | 14,8 | 1,0 | 0,5 |

Die Beispiele 11 bis 14 zeigen, dass auch nach dem Lösungsmittelverfahren Haftklebestreifen enthaltend sphärische Füllstoffpartikel (Sidistar T120U) hergestellt werden können, die im Vergleich zum füllstofffreien Haftklebestreifen eine deutlich verringerte Reißeranfälligkeit aufweisen (sowohl bei einem Abzugswinkel von 45°, als auch bei einem Abzugswinkel von 90°). Zudem werden die klebtechnischen Eigenschaften wie der Tack und die Klebkraft von den Partikeln nicht wesentlich beeinträchtigt. Gleiches gilt für die Schockresistenz.

Tabelle 4b.

| Beispiel | Reißeranfälligkeit (45°) [%] | Reißeranfälligkeit (90°) [%] | Tack [N] | Klebkraft [N/cm] |
|---|---|---|---|---|
| 14 | 45 | 85 | 3,9 | 14,8 |
| 15 | 50 | 88 | 3,7 | 13,8 |
| 16 | 46 | 88 | 3,1 | 12,5 |
| 17 | 51 | 81 | 2,9 | 10,4 |

Die Beispiele 14 bis 17 zeigen, dass unter Verwendung des hydrophoben Aerosil® R816 in verschiedenen Mengen die Reißeranfälligkeit gegenüber dem füllstofffreien Haftklebestreifen sich nicht verbessert. Zudem ist eine Verschlechterung von Tack und Klebkraft zu erkennen. Aufgrund dieser unzureichenden Werte wurde von einer weiteren Untersuchung der Muster (Schockresistenz) abgesehen.

(d) die Tabellen 5a und 5b zeigen mechanische und klebtechnische Eigenschaften der dreischichtigen Haftklebestreifen auf Basis von Vinylaromatenblockcopolymer.

Tabelle 5a.

| Beispiel | Reißeranfälligkeit (45°) [%] | Reißeranfälligkeit (90°) [%] | Tack [N] | Klebkraft [N/cm] | DuPont x,y [J] | DuPont z [J] |
|---|---|---|---|---|---|---|
| 18 | 13 | 18 | 3,7 | 11,8 | 0,9 | 0,7 |
| 19 | 10 | 14 | 3,8 | 11,8 | 1,0 | 0,7 |
| 20 | 31 | 47 | 3,7 | 12,2 | 1,0 | 0,7 |

Tabelle 5b.

| Beispiel | Reißeranfälligkeit (45°) [%] | Reißeranfälligkeit (90°) [%] | Tack [N] | Klebkraft [N/cm] | DuPont x,y [J] | DuPont z [J] |
|---|---|---|---|---|---|---|
| 21 | 25 | 74 | 3,9 | 12,1 | 1,1 | 0,8 |
| 22 | 21 | 30 | 3,6 | 12,0 | 1,1 | 0,8 |
| 23 | 50 | 88 | 3,7 | 11,8 | 0,9 | 0,7 |

Die Beispiele 18 bis 23 zeigen, dass auch in mehrschichtigen Haftklebestreifen wie einem Dreischichtaufbau die Reißeranfälligkeit deutlich verringert werden kann, in dem in mindestens eine Schicht ein erfindungsgemäßer Füllstoff inkorporiert wird (hier: Sidistar T120U), wobei der Füllstoff nicht zu verringertem Tack, verringerter Klebkraft oder verringerter Schockresistenz führt. Auch im Dreischichtaufbau kann die Reißeranfälligkeit durch die Menge an Füllstoff eingestellt werden.

Außerdem zeigt ein Vergleich der Beispiele 18 bis 20, dessen innenliegende Schicht einen vergleichsweise geringen Diblockanteil im Vinylaromatenblockcopolymer aufweist, mit den Beispielen 21 bis 23, dass eine Verringerung des Diblockanteils im Vinylaromatenblockcopolymer eine Absenkung der Reißeranfälligkeit bewirken kann. Vermutlich wird die Reißeranfälligkeit zudem in den Beispielen 18 bis 20 auch dadurch positiv beeinflusst, dass in den Beispielen 18 bis 20 die innenliegende Schicht (wie auch die außenliegenden Schichten) kein Flüssigharz enthält.

Ein Vergleich von Beispiel 23, dessen außenliegende Haftklebemassenschichten mit Kraton D1116 radiales Vinylaromatenblockcopolymer enthalten, mit Beispiel 5 zeigt zudem, dass in einem Haftklebestreifen auf Basis von Vinylaromatenblockcopolymer die Reißeranfälligkeit durch jedenfalls anteilige Verwendung von radialem Vinylaromatenblockcopolymer verringert werden kann.

Ferner zeigen die Beispiele 18 bis 23, dass die Schockresistenz von erfindungsgemäßen Haftklebestreifen durch Schäumung, beispielsweise durch expandierte Mikroballons, erhöht werden kann.

**Patentansprüche**

1. Haftklebestreifen, der sich durch dehnendes Verstrecken im Wesentlichen in der Verklebungsebene rückstands- und zerstörungsfrei wieder ablösen lässt, aus ein oder mehreren Haftklebemassenschichten und gegebenenfalls ein oder mehreren Zwischenträgerschichten,

   wobei mindestens eine der Haftklebemassenschichten mindestens einen in seine Primärpartikel vereinzelbaren Füllstoff enthält, wobei die Primärpartikel

   (i) sphärisch sind, und
   (ii) einen mittleren Durchmesser d(0,5) von weniger als 10 $\mu$m aufweisen, und wobei das Verhältnis aus mittlerem Durchmesser d(0,5) der Primärpartikel zur Dicke der Haftklebemassenschicht, in der die Primärpartikel enthalten sind, weniger als 1 :2 beträgt, **dadurch gekennzeichnet, dass**

   mindestens eine Haftklebemassenschicht auf Vinylaromatenblockcopolymer basiert, wobei das Vinylaromatenblockcopolymer (i) Polymerblöcke überwiegend gebildet durch Polymerisation von Vinylaromaten (A-Blöcke), bevorzugt Styrol, und gleichzeitig (ii) Polymerblöcke überwiegend gebildet durch Polymerisation von konjugierten Dienen mit 4 bis 18 C-Atomen und/oder Isobutylen (B-Blöcke), bevorzugt von 1 ,3-Dienen wie zum Beispiel Butadien, enthält, wobei die B-Blöcke optional mindestens teilweise, wie zum Beispiel vollständig, hydriert sind, und
   wobei der Haftklebestreifen eine Dicke von weniger als 500 $\mu$m aufweist.

2. Haftklebestreifen nach Anspruch 1, **dadurch gekennzeichnet, dass**
   die Primärpartikel einen mittleren Durchmesser d(0,5) von 10 nm bis 1 $\mu$m, bevorzugter von 30 nm bis 500 nm, noch bevorzugter von 50 nm bis 250 nm und insbesondere von 100 bis 200 nm, wie zum Beispiel von 150 nm aufweisen.

3. Haftklebestreifen nach Anspruch 1, **dadurch gekennzeichnet, dass**
   die Primärpartikel einen mittleren Durchmesser d(0,5) von 100 nm bis weniger als 10 $\mu$m, bevorzugter von 1 $\mu$m bis weniger als 10 $\mu$m, noch bevorzugter von 3 $\mu$m bis weniger als 10 $\mu$m aufweisen.

4. Haftklebestreifen nach einem der vorstehenden Ansprüche, **dadurch gekennzeichnet, dass** das Verhältnis aus mittlerem Durchmesser d(0,5) der Primärpartikel zur Dicke der Haftklebemassenschicht, in der die Primärpartikel enthalten sind, weniger als 1 :5, bevorzugt weniger als 1 :10, bevorzugter weniger als 1 :30, noch bevorzugter weniger als 1 :50, insbesondere weniger als 1 :100 beträgt.

5. Haftklebestreifen gemäß einem der vorstehenden Ansprüche, **dadurch gekennzeichnet, dass**
   die Partikel des Füllstoffs anorganische Partikel wie beispielsweise Siliziumdioxid- Partikel sind.

6. Haftklebestreifen gemäß einem der vorstehenden Ansprüche, **dadurch gekennzeichnet, dass**

der Füllstoff in der Haftklebemassenschicht zu bis zu 50 Gew.-%, vorzugsweise bis zu 30 Gew.-%, bevorzugter bis zu 25 Gew.-% noch bevorzugter bis zu 20 Gew.-%, und insbesondere bis zu 15 Gew.-%, und vorzugsweise zu mindestens 2 Gew.-%, bevorzugter mindestens 4 Gew.-%, und insbesondere mindestens 7 Gew.-%, jeweils bezogen auf das Gesamtgewicht der Haftklebemassenschicht, enthalten ist.

7. Haftklebestreifen gemäß Anspruch 1, **dadurch gekennzeichnet, dass**
das Vinylaromatenblockcopolymer der Haftklebemassenschicht Triblockcopolymer A-B-A und/oder Multiblockcopolymer enthält, und optional ferner Diblockcopolymer A-B.

8. Haftklebestreifen gemäß Anspruch 7, **dadurch gekennzeichnet, dass**
das Vinylaromatenblockcopolymer zu mindestens 90 Gew.-%, vorzugsweise vollständig, aus Diblockcopolymer A- B und Triblockcopolymer A-B-A besteht.

9. Haftklebestreifen gemäß Anspruch 7, **dadurch gekennzeichnet, dass**
das Vinylaromatenblockcopolymer radiales Blockcopolymer (A-B)n X oder (A-B- A)n X, insbesondere (A-B)n X enthält, worin jeweils X für den Rest eines Kopplungsreagenzes oder Initiators und n für eine ganze Zahl > 3 steht, wobei der Anteil des radialen Blockcopolymers in Bezug auf den Gesamtblockcopolymergehalt vorzugsweise mehr als 10 Gew.-%, bevorzugter mehr als 30 Gew.-% und insbesondere mehr als 50 Gew.-% beträgt.

10. Haftklebestreifen gemäß einem der Ansprüche 7 bis 9, **dadurch gekennzeichnet, dass** der Anteil an Diblockcopolymer in Bezug auf den Gesamtblockcopolymergehalt 10 bis 65 Gew.-%, vorzugsweise 12 bis 55 Gew.-%, bevorzugter 15 bis 45 Gew.-% und insbesondere 15 bis 30 Gew.-% beträgt.

11. Haftklebestreifen gemäß einem der vorstehenden Ansprüche, **dadurch gekennzeichnet, dass**

der Haftklebestreifen aus einer einzigen Haftklebemassenschicht besteht oder
**dadurch gekennzeichnet, dass**
der Haftklebestreifen aus mindestens zwei, wie beispielsweise genau drei Schichten besteht.

12. Haftklebestreifen gemäß einem der vorstehenden Ansprüche, **dadurch gekennzeichnet, dass**
die Klebkraft des Haftklebestreifens auf mindestens einer Seite, vorzugsweise auf beiden Seiten, kleiner als 29 N/cm ist, vorzugsweise kleiner 20 N/cm.

13. Verfahren zur Herstellung eines Haftklebestreifens gemäß einem der vorstehenden Ansprüche, wobei der Haftklebestreifen mittels eines lösungsmittelbasierten Beschichtungsverfahrens oder Hotmeltbeschichtungsverfahrens hergestellt wird.

14. Verwendung mindestens einer Haftklebemasse, die mindestens einen in seine Primärpartikel vereinzelbaren Füllstoff enthält, wobei die Primärpartikel

(i) sphärisch sind, und
(ii) einen mittleren Durchmesser d(0,5) von weniger als 10 $\mu$m aufweisen, in einem Haftklebestreifen, der sich durch dehnendes Verstrecken im Wesentlichen in der Verklebungsebene rückstands- und zerstörungsfrei wieder ablösen lässt, aus ein oder mehreren Haftklebemassenschichten und gegebenenfalls ein oder mehreren Zwischenträgerschichten,

wobei das Verhältnis aus mittlerem Durchmesser d(0,5) der Primärpartikel zur Dicke der Haftklebemassenschicht, in der die Primärpartikel enthalten sind, weniger als 1 :2 beträgt und wobei mindestens eine Haftklebemassenschicht auf Vinylaromatenblockcopolymer basiert, wobei das Vinylaromatenblockcopolymer (i) Polymerblöcke überwiegend gebildet durch Polymerisation von Vinylaromaten (A-Blöcke), bevorzugt Styrol, und gleichzeitig (ii) Polymerblöcke überwiegend gebildet durch Polymerisation von konjugierten Dienen mit 4 bis 18 C-Atomen und/oder Isobutylen (B-Blöcke), bevorzugt von 1 ,3-Dienen wie zum Beispiel Butadien, enthält, wobei die B-Blöcke optional mindestens teilweise, wie zum Beispiel vollständig, hydriert sind.

15. Verwendung eines Haftklebstreifens gemäß einem der Ansprüche 1 bis 12 zur Verklebung von elektronischen Bauteilen wie insbesondere Akkus und elektronischen Geräten wie insbesondere Handys.

**Claims**

1.  Pressure-sensitive adhesive strip (PSA strip) which is redetachable, without residue or destruction, by extensive stretching substantially in the bond plane, comprising one or more layers of pressure-sensitive adhesive (PSA layers) and optionally one or more intermediate carrier layers,

    where at least one of the PSA layers comprises at least one filler which can be separated into its primary particles, the primary particles

    (i) being spherical, and
    (ii) having a median diameter d(0.5) of less than 10 $\mu$m,

    and where the ratio of the median diameter d(0.5) of the primary particles to the thickness of the PSA layer containing the primary particles is less than 1:2, **characterized in that** at least one PSA layer is based on vinyl aromatic block copolymer, where the vinyl aromatic block copolymer comprises (i) polymer blocks predominantly formed by polymerization of vinyl aromatics (A blocks), preferably styrene, and at the same time (ii) polymer blocks predominantly formed by polymerization of conjugated dienes having 4 to 18 carbon atoms and/or isobutylene (B blocks), preferably of 1,3-dienes such as, for example, butadiene, where the B blocks are optionally at least partly, such as, for example, completely, hydrogenated, and where the PSA strip has a thickness of less than 500 $\mu$m.

2.  PSA strip according to Claim 1,
    **characterized in that**
    the primary particles have a median diameter d(0.5) of 10 nm to 1 um, more preferably of 30 nm to 500 nm, more preferably still of 50 nm to 250 nm, and more particularly of 100 to 200 nm, such as, for example, of 150 nm.

3.  PSA strip according to Claim 1,
    **characterized in that**
    the primary particles have a median diameter d(0.5) of 100 nm to less than 10 pm, more preferably of 1 $\mu$m to less than 10 pm, more preferably still of 3 $\mu$m to less than 10 $\mu$m.

4.  PSA strip according to any of the preceding claims, **characterized in that**
    the ratio of the median diameter d(0.5) of the primary particles to the thickness of the PSA layer containing the primary particles is less than 1:5, preferably less than 1:10, more preferably less than 1:30, more preferably still less than 1:50, more particularly less than 1:100.

5.  PSA strip according to any of the preceding claims, **characterized in that**
    the particles of the filler are inorganic particles such as, for example, silicon dioxide particles.

6.  PSA strip according to any of the preceding claims, **characterized in that**
    the filler is present in the PSA layer at up to 50 wt%, preferably up to 30 wt%, more preferably up to 25 wt%, more preferably still up to 20 wt%, and more particularly up to 15 wt%, and preferably at not less than 2 wt%, more preferably not less than 4 wt%, and more particularly not less than 7 wt%, based in each case on the total weight of the PSA layer.

7.  PSA strip according to Claim 1,
    **characterized in that**
    the vinyl aromatic block copolymer of the PSA layer comprises triblock copolymer A-B-A and/or multiblock copolymer, and optionally, further, diblock copolymer A-B.

8.  PSA strip according to Claim 7,
    **characterized in that**
    the vinyl aromatic block copolymer consists to an extent of at least 90 wt%, preferably completely, of diblock copolymer A-B and triblock copolymer A-B-A.

9.  PSA strip according to Claim 7,
    **characterized in that**
    the vinyl aromatic block copolymer comprises radial block copolymer $(A-B)_n X$ or $(A-B-A)_n X$, especially $(A-B)_n X$, in

which in each case X is the radical of a coupling reagent or initiator and n is an integer > 3, where the fraction of the radial block copolymer in relation to the total block copolymer content is preferably more than 10 wt%, more preferably more than 30 wt%, and more particularly more than 50 wt%.

10. PSA strip according to any of Claims 7 to 9, **characterized in that**
the fraction of diblock copolymer in relation to the total block copolymer content is 10 to 65 wt%, preferably 12 to 55 wt%, more preferably 15 to 45 wt%, and more particularly 15 to 30 wt%.

11. PSA strip according to any of the preceding claims, **characterized in that**

the PSA strip consists of a single PSA layer, or **characterized in that**
the PSA strip consists of at least two, such as, for example, exactly three, layers.

12. PSA strip according to any of the preceding claims, **characterized in that**
the peel adhesion of the PSA strip on at least one side, preferably on both sides, is less than 29 N/cm, preferably less than 20 N/cm.

13. Method for producing a PSA strip according to any of the preceding claims, where the PSA strip is produced by means of a solvent-based coating method or hotmelt coating method.

14. Use of at least one pressure-sensitive adhesive (PSA) which comprises at least one filler which can be separated into its primary particles, the primary particles

(i) being spherical, and
(ii) having a median diameter d(0.5) of less than 10 pm,
in a pressure-sensitive adhesive strip (PSA strip) which is redetachable, without residue or destruction, by extensive stretching substantially in the bond plane, comprising one or more layers of pressure-sensitive adhesive (PSA layers) and optionally one or more intermediate carrier layers,
where the ratio of the median diameter d(0.5) of the primary particles to the thickness of the PSA layer containing the primary particles is less than 1:2 and where at least one PSA layer is based on vinyl aromatic block copolymer, where the vinyl aromatic block copolymer comprises (i) polymer blocks predominantly formed by polymerization of vinyl aromatics (A blocks), preferably styrene, and at the same time (ii) polymer blocks predominantly formed by polymerization of conjugated dienes having 4 to 18 carbon atoms and/or isobutylene (B blocks), preferably of 1,3-dienes such as, for example, butadiene, where the B blocks are optionally at least partly, such as, for example, completely, hydrogenated.

15. Use of a PSA strip according to any of Claims 1 to 12 for bonding electronic components such as, in particular, rechargeable batteries and electronic devices such as, in particular, cell phones.

## Revendications

1. Ruban adhésif de contact qui peut être détaché par étirage pour l'essentiel dans le plan de collage, sans résidu ni destruction, constitué d'une ou plusieurs couches de masse adhésive de contact et éventuellement d'une ou plusieurs couches supports intermédiaires,

au moins l'une des couches de masse adhésive de contact contenant au moins une charge individualisable en ses particules primaires, les particules primaires

(i) étant sphériques, et
(ii) présentant un diamètre moyen d(0,5) inférieur à 10 pm, et le rapport du diamètre moyen d(0,5) des particules primaires à l'épaisseur de la couche de masse adhésive de contact dans laquelle sont contenues les particules primaires étant inférieur à 1:2, **caractérisé en ce qu'**au moins une couche de masse adhésive de contact est à base d'un copolymère à blocs vinylaromatiques, le copolymère à blocs vinylaromatiques contenant (i) des blocs polymères formés essentiellement par polymérisation de composés vinylaromatiques (blocs A), de préférence le styrène, et simultanément (ii) des blocs polymères formés essentiellement par polymérisation de diènes conjugués ayant 4 à 18 atomes de carbone et/ou d'isobutylène (blocs B), de préférence de 1,3-diènes comme par exemple le butadiène, les blocs B étant éventuellement au moins partiellement hydrogénés, par exemple complètement, et

le ruban adhésif de contact présentant une épaisseur inférieure à 500 μm.

2. Ruban adhésif de contact selon la revendication 1, **caractérisé en ce que** les particules primaires présentent un diamètre moyen d(0,5) de 10 nm à 1 pm, plus préférentiellement de 30 nm à 500 nm, encore plus préférentiellement de 50 nm à 250 nm et en particulier de 100 à 200 nm, comme par exemple de 150 nm.

3. Ruban adhésif de contact selon la revendication 1, **caractérisé en ce que** les particules primaires présentent un diamètre moyen d(0,5) de 100 nm à moins de 10 pm, plus préférentiellement de 1 μm à moins de 10 μm, encore plus préférentiellement de 3 μm à moins de 10 μm.

4. Ruban adhésif de contact selon l'une des revendications précédentes, **caractérisé en ce que** le rapport du diamètre moyen d(0,5) des particules primaires à l'épaisseur de la couche de masse adhésive de contact dans laquelle sont contenues les particules primaires est inférieur à 1:5, de préférence inférieur à 1:10, plus préférentiellement inférieur à 1:30, encore plus préférentiellement inférieur à 1:50, en particulier inférieur 1:100.

5. Ruban adhésif de contact selon l'une des revendications précédentes, **caractérisé en ce que** les particules de la charge sont des particules inorganiques, par exemple des particules de dioxyde de silicium.

6. Ruban adhésif de contact selon l'une des revendications précédentes, **caractérisé en ce que** la charge est contenue dans la couche de masse adhésive de contact en une quantité jusqu'à 50 % en poids, de préférence jusqu'à 30 % en poids, plus préférentiellement jusqu'à 25 % en poids, encore plus préférentiellement jusqu'à 20 % en poids et en particulier jusqu'à 15 % en poids, et de préférence en une quantité d'au moins 2 % en poids, plus préférentiellement d'au moins 4 % en poids et en particulier d'au moins 7 % en poids, dans chaque cas par rapport au poids total de la couche de masse adhésive de contact.

7. Ruban adhésif de contact selon la revendication 1, **caractérisé en ce que** le copolymère à blocs vinylaromatiques de la couche de masse adhésive de contact contient un copolymère tribloc A-B-A et/ou un copolymère multibloc et éventuellement en outre un copolymère dibloc A-B.

8. Ruban adhésif de contact selon la revendication 7, **caractérisé en ce que** le copolymère à blocs vinylaromatiques est constitué à raison d'au moins 90 % en poids, de préférence en totalité, d'un copolymère dibloc A-B et d'un copolymère tribloc A-B-A.

9. Ruban adhésif de contact selon la revendication 7, **caractérisé en ce que** le copolymère à blocs vinylaromatiques contient un copolymère à blocs radiaux (A-B)n X ou (A-B-A)n X, en particulier (A-B)n X, où chaque X représente le radical d'un réactif de couplage ou d'un amorceur et n représente un nombre entier > 3, la proportion du copolymère à blocs radiaux étant, par rapport à la quantité totale de copolymère à blocs, de préférence supérieure à 10 % en poids, plus préférentiellement supérieure à 30 % en poids et en particulier supérieure à 50 % en poids.

10. Ruban adhésif de contact selon l'une des revendications 7 à 9, **caractérisé en ce que** la proportion du copolymère dibloc, par rapport à la totalité du copolymère à blocs, est de 10 à 65 % en poids, de préférence de 12 à 55 % en poids, plus préférentiellement de 15 à 45 % en poids et en particulier de 15 à 30 % en poids.

11. Ruban adhésif de contact selon l'une des revendications précédentes, **caractérisé en ce que** le ruban adhésif de contact est constitué d'une couche unique de masse adhésive de contact ou est **caractérisé en ce que** le ruban adhésif de contact est constitué d'au moins deux, par exemple d'exactement trois couches.

12. Ruban adhésif de contact selon l'une des revendications précédentes, **caractérisé en ce que** la force d'adhérence du ruban adhésif de contact sur au moins une face, de préférence sur les deux faces, est inférieure à 29 N/cm, de préférence inférieure à 20 N/cm.

13. Procédé de fabrication d'un ruban adhésif de contact selon l'une des revendications précédentes, dans lequel le ruban adhésif de contact est fabriqué par un procédé de revêtement aux solvants ou un procédé de revêtement thermofusible.

14. Utilisation d'au moins une masse adhésive de contact qui contient au moins une charge individualisable en ses particules primaires, les particules primaires

(i) étant sphériques, et

(ii) présentant un diamètre moyen d(0,5) inférieur à 10 pm, dans un ruban adhésif de contact qui peut être détaché par étirage pour l'essentiel dans le plan de collage, sans résidu ni destruction, d'une ou plusieurs couches de masse adhésive de contact et éventuellement une ou plusieurs couches supports intermédiaires,

le rapport du diamètre moyen d(0,5) des particules primaires à l'épaisseur de la couche de masse adhésive de contact dans laquelle sont contenues les particules primaires étant inférieur à 1:2, et au moins une couche de masse adhésive de contact étant à base d'un copolymère à blocs vinylaromatiques, le copolymère à blocs vinylaromatiques contenant (i) des blocs polymères formés essentiellement par polymérisation de composés vinylaromatiques (blocs A), de préférence le styrène, et simultanément (ii) des blocs polymères formés essentiellement par polymérisation de diènes conjugués ayant 4 à 18 atomes de carbone et/ou d'isobutylène (bloc B), de préférence de 1,3-diènes, comme par exemple le butadiène, les blocs B étant éventuellement au moins partiellement, par exemple complètement, hydrogénés.

15. Utilisation d'un ruban adhésif de contact selon l'une des revendications 1 à 12 pour coller des composants électroniques, en particulier des batteries et des appareils électroniques, en particulier des téléphones portables.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- WO 2007058812 A1
- EP 1995282 A1
- WO 2010147888 A2
- US 7531595 B
- EP 2268757 A1
- DE 102015208792 A1
- WO 2011133518 A1
- DE 102017218264
- US 4024312 A
- DE 3331016 C2
- WO 9211332 A1
- WO 9211333 A1
- DE 4222849 C1
- WO 9506691 A1
- DE 19531696 A1
- DE 19626870 A1
- DE 19649727 A1
- DE 19649728 A1
- DE 19649729 A1
- DE 19708364 A1
- DE 19720145 A1
- DE 19820858 A1
- WO 9937729 A1
- DE 10003318 A1
- DE 4233872 C1
- DE 19511288 C1
- US 5507464 B1
- US 5672402 B1
- WO 9421157 A1
- DE 4428587 C1
- DE 4431914 C1
- WO 9707172 A1
- DE 19627400 A1
- WO 9803601 A1

- DE 19649636 A1
- DE 19720526 A1
- DE 19723177 A1
- DE 19723198 A1
- DE 19726375 A1
- DE 19756084 C1
- DE 19756816 A1
- DE 19842864 A1
- DE 19842865 A1
- WO 9931193 A1
- WO 9963018 A1
- WO 0012644 A1
- DE 19938693 A1
- DE 10212049 A1
- DE 10063018 B4
- WO 2010141248 A1
- EP 0257984 A1
- DE 3537433 A1
- WO 9531225 A1
- EP 0693097 A1
- WO 9818878 A1
- US 4885170 A
- EP 1102809 B
- DE 102015206076 A1
- DE 102012223670 A1
- US 20170218233 A1
- WO 2016047436 A1
- WO 2014174958 A
- WO 2010082658 A
- WO 2019072707 A
- WO 2009114683 A1
- WO 2010077541 A1
- WO 2010078396 A1

### In der Beschreibung aufgeführte Nicht-Patentliteratur

- Polymer Handbook. Wiley, 1999
- *CHEMICAL ABSTRACTS,* 9003-55-8
- *CHEMICAL ABSTRACTS,* 31393-98-3

- *CHEMICAL ABSTRACTS,* 26813-14-9
- *CHEMICAL ABSTRACTS,* 6683-19-8
- *CHEMICAL ABSTRACTS,* 31570-04-4